# EUROPEAN PATENT APPLICATION

(11) **EP 3 929 418 A2**
(43) Date of publication of application: **29.12.2021**
(21) Application number: 21178500.1
(22) Date of filing: 09.06.2021
(51) Int. Cl.: F02C 3/34, F02C 7/18, F01K 25/10

(54) **GAS TURBINE FACILITY**

(30) Priority: 23.06.2020 JP 2020108029
(71) Applicant: Toshiba Energy Systems & Solutions Corporation, Saiwai-ku Kawasaki-shi Kanagawa 2120013 (JP)
(72) Inventor: Iwai, Shogo, Kawasaki-shi, Kanagawa (JP); Tashima, Tsuguhisa, Kawasaki-shi, Kanagawa (JP); Ono, Takahiro, Kawasaki-shi, Kanagawa (JP)
(74) Representative: Hoffmann Eitle

(57) **Abstract**

A CO₂ gas turbine facility 150 of an embodiment includes: a combustion apparatus 70 which combusts fuel and an oxidant to produce a combustion gas to be introduced into a turbine 1; a pipe 180 which circulates carbon dioxide in a working fluid discharged from the turbine 1 through the combustion apparatus 70 as a cooling medium; and a bypass pipe 188 which introduces a fluid at a lower temperature than a temperature of carbon dioxide flowing through the pipe 180 into the pipe 180.

## Description

### FIELD

Embodiments described herein relate generally a gas turbine facility.

### BACKGROUND

Increasing the efficiency of power generation plants is in progress in response to demands for reduction of carbon dioxide, resource saving, and the like. In order to achieve this increase in the efficiency, specifically, increasing the temperature of a working fluid in a gas turbine, employing a combined cycle, and the like are actively in progress. Further, research and development of collection techniques of carbon dioxide are also in progress.

Under such circumstances, a gas turbine facility including a combustion apparatus which combusts a fuel and oxygen in a supercritical CO₂ atmosphere (to be referred to as a CO₂ gas turbine facility, hereinafter) is under consideration. In this CO₂ gas turbine facility, a part of a combustion gas produced in the combustion apparatus is circulated through a system of the CO₂ gas turbine facility.

Here, in the combustion apparatus of the CO₂ gas turbine facility, flow rates of the fuel and an oxidant are regulated so as to have a stoichiometric mixture ratio (equivalence ratio 1) at rated time, for example. Therefore, carbon dioxide (CO₂) obtained by removing water vapor from the combustion gas circulates through the system.

Incidentally, the equivalence ratio which is mentioned here is an equivalence ratio calculated based on a fuel flow rate and an oxygen flow rate. In other words, it is an equivalence ratio when it is assumed that the fuel and the oxygen are uniformly mixed (overall equivalence ratio).

The circulating carbon dioxide is pressurized to a pressure equal to or more than a critical pressure to become a supercritical fluid. A part of the circulating carbon dioxide is introduced into the combustion apparatus and the turbine as a cooling medium. Specifically, depending on a set operation load of the power generation plant, carbon dioxide at a predetermined temperature and a predetermined flow rate is introduced into the combustion apparatus and the turbine.

Here, the carbon dioxide introduced into the combustion apparatus is introduced into the turbine together with a combustion gas. Further, most of the carbon dioxide introduced into the turbine cools constituent members of the turbine, thereafter flowing into a main flow path through which a working fluid flows.

At a start time of the above-described CO₂ gas turbine facility, it is planned to introduce the carbon dioxide at the predetermined temperature and the predetermined flow rate into the combustion apparatus and the turbine as the cooling medium.

Here, at the start time of the CO₂ gas turbine facility, for example, due to factors such as load variations in the combustion apparatus and a temperature rise of circulating carbon dioxide, it is assumed that a temperature of the working fluid at a turbine inlet rises more than a planned value.

In the CO₂ gas turbine facility which circulates a part of the working fluid, when the temperature of the working fluid at the turbine inlet exceeds the planned value, the temperature of the working fluid at the turbine inlet rises every time the working fluid repeats the circulation.

However, the conditions of the carbon dioxide to be introduced into the combustion apparatus and the turbine as the cooling medium are planned based on a temperature, a flow rate, and so on of carbon dioxide at the time of normal operation. Therefore, when the temperature of the working fluid at the turbine inlet rises more than the planned value, the cooling medium cannot be introduced into the combustion apparatus and the turbine under appropriate conditions.

Therefore, a working fluid at a temperature exceeding a heat-resistant limit of the constituent members of the turbine flows through the main flow path in the turbine. This causes a concern for damage of the constituent members of the turbine, or the like.

Incidentally, the normal operation is the operation in a state where the load variations in the combustion apparatus, the temperature rise of circulating carbon dioxide, and so on do not occur.

### BRIEF DESCRIPTION OF THE DRAWINGS

Fig. 1 is a view illustrating a meridian cross section of a turbine and a combustion apparatus included in a CO₂ gas turbine facility of a first embodiment.
Fig. 2 is a system diagram of the CO₂ gas turbine facility of the first embodiment.
Fig. 3 is a block diagram illustrating a configuration of a control unit of a temperature reducing mechanism for a working fluid in the CO₂ gas turbine facility of the first embodiment.
Fig. 4 is a system diagram of a conventional CO₂ gas turbine facility.
Fig. 5 is a flowchart explaining the operation based on a sensed signal from a sensing unit in the temperature reducing mechanism for the working fluid in the CO₂ gas turbine facility of the first embodiment.
Fig. 6 is a system diagram of a CO₂ gas turbine facility for explaining another mode in the first embodiment.
Fig. 7 is a system diagram of a CO₂ gas turbine facility for explaining the other mode in the first embodiment.
Fig. 8 is a system diagram of a CO₂ gas turbine facility of a second embodiment.
Fig. 9 is a system diagram of a CO₂ gas turbine facility for explaining the other mode in the second embodiment.
Fig. 10 is a view illustrating a meridian cross section of a turbine and a combustion apparatus included in a CO₂ gas turbine facility of a third embodiment.
Fig. 11 is a system diagram of the CO₂ gas turbine facility of the third embodiment.
Fig. 12 is a system diagram of a CO₂ gas turbine facility for explaining another mode in the third embodiment.
Fig. 13 is a system diagram of a CO₂ gas turbine facility for explaining another mode in the third embodiment.
Fig. 14 is a view illustrating a meridian cross section of a turbine and a combustion apparatus included in a CO₂ gas turbine facility of a fourth embodiment.
Fig. 15 is a system diagram of the CO₂ gas turbine facility of the fourth embodiment.
Fig. 16 is a system diagram of a CO₂ gas turbine facility for explaining another mode in the fourth embodiment.
Fig. 17 is a system diagram of a CO₂ gas turbine facility for explaining another mode in the fourth embodiment.
Fig. 18 is a view illustrating a meridian cross section of a turbine and a combustion apparatus included in a CO₂ gas turbine facility of the other mode in the fourth embodiment.
Fig. 19 is a system diagram of the CO₂ gas turbine facility for explaining the other mode in the fourth embodiment.

### DETAILED DESCRIPTION

Hereinafter, embodiments of the present invention will be described in reference to the drawings.

In one embodiment, a gas turbine facility includes: a combustion apparatus which combusts fuel and an oxidant to produce a combustion gas to be introduced into a turbine; a carbon dioxide circulation pipe which circulates carbon dioxide in a working fluid discharged from the turbine through the combustion apparatus as a cooling medium; and a fluid introduction pipe which introduces a fluid at a lower temperature than a temperature of carbon dioxide flowing through the carbon dioxide circulation pipe into the carbon dioxide circulation pipe.

### (First embodiment)

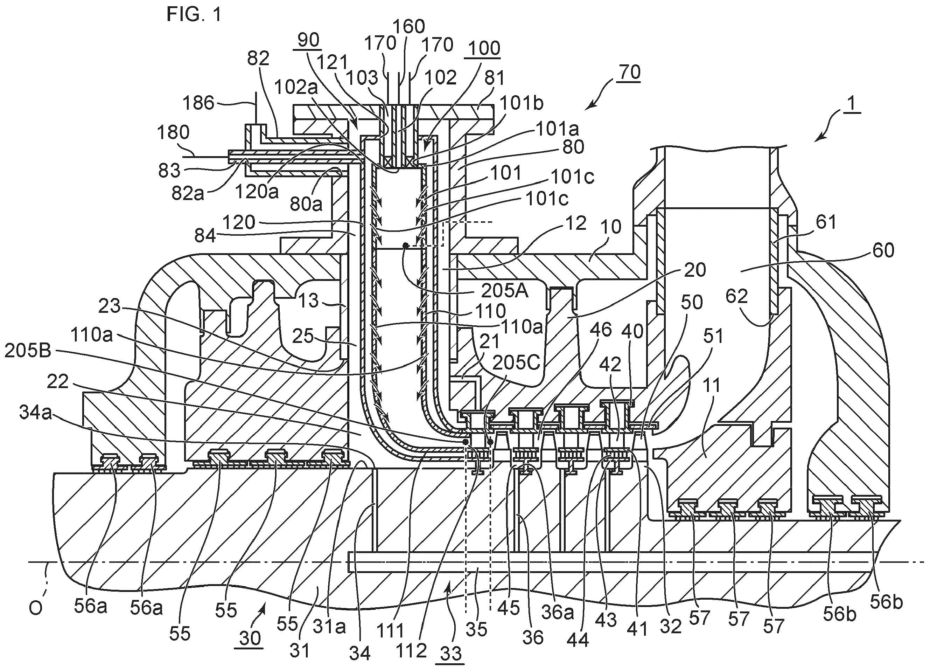

Fig. 1 is a view illustrating a meridian cross section of a turbine 1 and a combustion apparatus 70 included in a CO₂ gas turbine facility of a first embodiment.

First, the turbine 1 and the combustion apparatus 70 illustrated in Fig. 1 will be described. Here, there is exemplified and described the turbine included in the CO₂ gas turbine facility including a configuration in which a part of carbon dioxide (CO₂) being a combustion product is circulated at a supercritical pressure. Here, an axial flow turbine is exemplified and described as the turbine.

In this CO₂ gas turbine facility, a part of a working fluid discharged from the turbine 1 is circulated through the combustion apparatus 70 and the turbine 1, for example, as a cooling medium. Note that the working fluid circulated through the combustion apparatus 70 and the turbine 1 is carbon dioxide pressurized to a pressure equal to or more than a critical pressure.

As illustrated in Fig. 1, the turbine 1 includes an outer casing 10 and an inner casing 20 included inside the outer casing 10. Further, a turbine rotor 30 is provided to penetrate the inner casing 20 and the outer casing 10.

An outer shroud 40 is provided on an inner periphery of the inner casing 20 over a circumferential direction. An inner shroud 41 is provided on the inside (radial inside) of the outer shroud 40 over the circumferential direction. Then, between the outer shrouds 40 and the inner shrouds 41, a plurality of stator blades 42 are supported in the circumferential direction to constitute a stator blade cascade. The stator blade cascade is provided in a plurality of stages in the center axis direction of the turbine rotor 30.

Here, the radial inside is a side approaching a center axis O (center axis O side) in the radial direction. Note that the center axis direction of the turbine rotor 30 is hereinafter simply referred to an axial direction.

Inside the inner shroud 41, a heat shield piece 43 is provided opposite to the inner shroud 41 over the circumferential direction. The heat shield piece 43 is implanted in the turbine rotor 30, for example. A sealing portion 44 is constituted between the inner shroud 41 and the heat shield piece 43.

In the inner casing 20, for example, an introduction passage 21 which guides the cooling medium into the outer shroud 40 at an initial-stage stator blade 42 is formed. One end of the introduction passage 21 is open to a later-described space 22 in the inner casing 20.

The interior of the outer shroud 40 is communicated with the interior of the stator blade 42. The cooling medium guided to the interior of the outer shroud 40 is guided into the stator blade 42 to cool the stator blade 42. In the stator blade 42, for example, an ejection hole (not illustrated) from which the cooling medium guided into the stator blade 42 is ejected to a working fluid flow path 46 is formed.

The turbine rotor 30 includes a rotor body portion 31, a turbine disk 32, and a cooling structure portion 33.

The rotor body portion 31 is constituted by a column-shaped member. Both ends of the rotor body portion 31 are supported rotatably by bearings (not illustrated).

The turbine disk 32 protrudes from an outer peripheral surface of the rotor body portion 31 to a radial outside over the circumferential direction. The turbine disk 32 constituted by this annular protruding body is provided in a plurality of stages in the axial direction. Here, the radial outside is a side apart from the center axis O in the radial direction.

A plurality of rotor blades 50 are implanted on tip portions of the turbine disks 32 in the circumferential direction to constitute a rotor blade cascade. An outer periphery of the rotor blade 50 is surrounded by a shroud segment 51, for example. The shroud segment 51 is supported by the outer shroud 40 and the inner casing 20.

Incidentally, the stator blade cascade and the rotor blade cascade are provided alternately in the axial direction. Then, the stator blade cascade and the rotor blade cascade immediately downstream from the stator blade cascade constitute turbine stages. The working fluid flow path 46 through which the working fluid flows is constituted by the turbine stages formed in the axial direction.

As illustrated in Fig. 1, between the turbine rotor 30 and the inner casing 20, gland seal parts 55 are included. Between the turbine rotor 30 and the outer casing 10, gland seal parts 56a, 56b are included. Between the turbine rotor 30 and the packing casing 11, gland seal parts 57 are included. These gland seal parts 55, 56a, 56b, 57 suppress leakage of the cooling medium and the working fluid to the outside.

The cooling structure portion 33 includes a structure in which the turbine rotor 30 is cooled by the cooling medium. As illustrated in Fig. 1, the cooling structure portion 33 includes an introduction passage 34, an axial passage 35, and a discharge passage 36. The introduction passage 34, the axial passage 35, and the discharge passage 36 are communicated with each other.

The introduction passage 34 is formed from an outer peripheral surface 31a of the rotor body portion 31 toward the radial inside, for example. The introduction passage 34 is constituted by a through hole penetrating into the axial passage 35. The introduction passage 34 is formed in the radial direction, for example. An inlet 34a of the introduction passage 34 is open to the space 22 in the inner casing 20 into which the cooling medium is introduced.

The axial passage 35 is formed in the axial direction of the rotor body portion 31 along the center axis O of the turbine rotor 30 with the center axis O of the turbine rotor 30 centered, as illustrated in Fig. 1, for example.

The axial passage 35 is provided to extend across at least from an axial position coupled to the introduction passage 34 to an axial position corresponding to an outlet at a final turbine stage. Note that an end portion of the axial passage 35 is sealed by a sealing member (not illustrated) or the like, for example.

The discharge passage 36 is constituted by a through hole penetrating from the axial passage 35 to the outer peripheral surface 31a of the rotor body portion 31. Specifically, as illustrated in Fig. 1, the discharge passage 36 communicates the axial passage 35 and a space 45 between the heat shield piece 43 and the outer peripheral surface 31a with each other. The discharge passage 36 is formed in the radial direction, for example.

A plurality of discharge passages 36 are included in the axial direction to correspond to the turbine stages subsequent to the second stage, for example. An outlet 36a of the discharge passage 36 is open to the space 45. Note that the space 45 is a space surrounded by the upstream-side and downstream-side turbine disks 32, the heat shield piece 43, and the outer peripheral surface 31a.

An exhaust hood 60 of the turbine 1 guides the working fluid having passed through the final-stage turbine stage to the outside of the turbine 1. In the exhaust hood 60, a sleeve 61 is provided between the outer casing 10 and the inner casing 20.

The sleeve 61 is constituted by a cylindrical member, for example. The sleeve 61 is supported by a stepped portion 62 formed on an inner periphery of an outlet of the inner casing 20 constituting the exhaust hood 60, for example. The sleeve 61 prevents the working fluid flowing through the exhaust hood 60 from flowing out in a space between the outer casing 10 and the inner casing 20.

The combustion apparatus 70 is installed in the turbine 1. The combustion apparatus 70 includes a combustor casing 80 and a combustor structure 90.

The combustor structure 90 is disposed to penetrate the outer casing 10 and the inner casing 20 from a direction perpendicular to the axial direction, for example, as illustrated in Fig. 1. Here, there is indicated one example of making the combustor structure 90 penetrate from the vertically upper side.

The combustor casing 80 surrounding the combustor structure 90 is provided outside the outer casing 10. The combustor casing 80 is constituted by a cylindrical casing whose both ends are open.

One end of the combustor casing 80 is fixed on the outer casing 10. The other end of the combustor casing 80 is closed by a head plate 81. Note that, for example, later-described fuel supply part 102 and oxidant supply part 103 penetrate through the head plate 81.

The outer casing 10 and the inner casing 20 have opening portions 12, 25 for making the combustor structure 90 penetrate therethrough. A sleeve 13 is provided between the outer casing 10 and the inner casing 20 in the portion where the combustor structure 90 penetrates.

The sleeve 13 is disposed to surround the combustor structure 90. The sleeve 13 is constituted by a cylindrical member, for example. The sleeve 13 is supported by a stepped portion 23 formed on an inner periphery of the opening portion 25 of the inner casing 20, for example.

The sleeve 13 prevents the cooling medium flowing around the combustor structure 90 from flowing out in a space between the outer casing 10 and the inner casing 20.

A cooling medium introduction pipe 82 which introduces the cooling medium into the combustor casing 80 is coupled to a side wall of the combustor casing 80. One end of the cooling medium introduction pipe 82 is fitted into and joined to an opening 80a formed in the side wall of the combustor casing 80, for example.

Further, a cooling medium introduction pipe 83 is provided to penetrate the interior of the cooling medium introduction pipe 82. One end of the cooling medium introduction pipe 83 is fitted into and joined to an opening 120a formed in a side wall of a cylinder body 120 in the combustor structure 90. A portion where the cooling medium introduction pipe 83 penetrates the interior of the cooling medium introduction pipe 82 has a double-pipe structure.

Incidentally, the cooling medium introduction pipe 83 penetrates an opening 82a formed in the cooling medium introduction pipe 82 to be inserted to the interior of the cooling medium introduction pipe 82, for example. Then, the cooling medium introduction pipe 83 is joined to the cooling medium introduction pipe 82 in this through portion (opening 82a).

The cooling medium introduced from the cooling medium introduction pipe 82 flows into a space 84 between the combustor casing 80 and the cylinder body 120. The cooling medium introduced from the cooling medium introduction pipe 83 flows into the cylinder body 120.

Here, a temperature of the cooling medium introduced from the cooling medium introduction pipe 83 is higher than a temperature of the cooling medium introduced from the cooling medium introduction pipe 82.

The combustor structure 90 includes a combustor 100, a transition piece 110, and the cylinder body 120.

The combustor 100 includes a combustor liner 101, the fuel supply part 102, and the oxidant supply part 103.

The combustor liner 101 is constituted by a cylindrical member in which the fuel and the oxidant are combusted. One end (upstream end) of the combustor liner 101 is blocked by an upstream end wall 101a, and the other end (downstream end) thereof is open. The upstream end wall 101a has an opening 101b for providing the fuel supply part 102 and the oxidant supply part 103.

Incidentally, the upstream means an upstream in a direction in which a combustion gas flows, and the downstream means a downstream in the direction in which the combustion gas flows.

Further, a side wall of the combustor liner 101 is provided with a plurality of introduction holes 101c for guiding the cooling medium flowing outside the combustor liner 101 to the interior thereof. This cooling medium flowing outside the combustor liner 101 has a function of cooling the combustor liner 101. Note that in Fig. 1, flows of the cooling medium flowing from the introduction holes 101c into the combustor liner 101 are indicated by arrows.

The fuel supply part 102 supplies the fuel into the combustor liner 101. The fuel supply part 102 is provided in the upstream end wall 101a of the combustor liner 101. The fuel supply part 102 is provided at the middle of the upstream end wall 101a, for example.

The fuel supply part 102 is constituted by a cylindrical tube or the like, for example. An outlet 102a of the fuel supply part 102 has a function as a fuel nozzle, for example. The fuel is ejected from the outlet 102a of the fuel supply part 102 into the combustor liner 101.

The oxidant supply part 103 supplies the oxidant into the combustor liner 101. The oxidant supply part 103 is provided in the upstream end wall 101a of the combustor liner 101. The oxidant supply part 103 is provided concentrically with the fuel supply part 102 and annularly around the fuel supply part 102, as illustrated in Fig. 1, for example.

The other end (downstream end) of the combustor liner 101 is coupled to the transition piece 110. The cylindrical transition piece 110 is provided to extend to the initial-stage stator blade 42.

A side wall of the transition piece 110 is provided with a plurality of introduction holes 110a for guiding the cooling medium flowing outside the transition piece 110 to the interior thereof. This cooling medium flowing outside the transition piece 110 has a function of cooling the transition piece 110. Note that in Fig. 1, flows of the cooling medium flowing from the introduction holes 110a into the transition piece 110 are indicated by arrows.

A downstream side of the transition piece 110 is constituted by an annular flow path portion 111. The annular flow path portion 111 is constituted by an annular pipe provided to surround the periphery of the turbine rotor 30. Note that the annular flow path portion 111 is constituted by combining divided structures formed of half-annular upper half portion and lower half portion, for example.

In the annular flow path portion 111, the working fluid (combustion gas) flowing through the interior of the transition piece 110 expands in a circumferential direction of the turbine rotor 30. An outlet 112 of the annular flow path portion 111 (an outlet of the transition piece 110) is opposed to the initial-stage stator blade 42. Then, the working fluid flowing in the annular flow path portion 111 is ejected from the outlet 112 toward the initial-stage stator blade 42.

Here, the fluid ejected from the outlet 112 of the annular flow path portion 111 (the outlet of the transition piece 110) is a fluid in which the combustion gas and carbon dioxide as the cooling medium are mixed together. Note that this fluid functions as the working fluid.

The cylinder body 120 surrounds the combustor 100 and the transition piece 110. Then, the cylinder body 120 divides a space between structures of the combustor 100 and the transition piece 110 and structures of the combustor casing 80, the outer casing 10, the inner casing 20, and the turbine rotor 30.

This causes the space 84 in the combustor casing 80 and the space 22 in the inner casing 20, which are described above, to be formed. Note that the space 22 in the inner casing 20 is a space surrounded by the inner casing 20, the turbine rotor 30, and the cylinder body 120, as illustrated in Fig. 1.

In one end (upstream end) of the cylinder body 120, which is closed, an opening 121 into which the fuel supply part 102 and the oxidant supply part 103 are inserted is formed. The other end (downstream end) of the cylinder body 120 is opened. An end portion of an opening portion on the downstream side of the cylinder body 120 is brought into contact with an outer peripheral surface of a downstream end portion of the transition piece 110.

Further, the cooling medium introduction pipe 83 is coupled to a side portion on the upstream side of the cylinder body 120 as described above.

In the above, the configurations of the turbine 1 and the combustion apparatus 70 and the configurations of introducing parts of the working fluid and the cooling medium introduced into the turbine 1 and the combustion apparatus 70 have been described.

Next, a system of the CO₂ gas turbine facility of this first embodiment will be described.

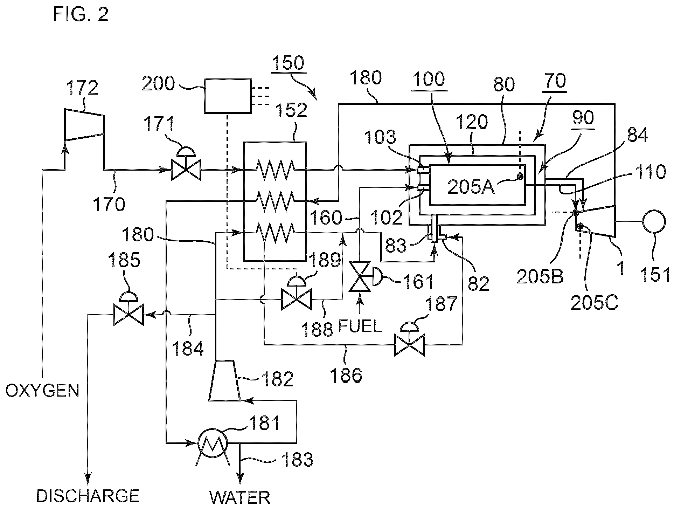

Fig. 2 is a system diagram of a CO₂ gas turbine facility 150 of the first embodiment.

As illustrated in Fig. 2, the CO₂ gas turbine facility 150 includes the combustion apparatus 70, the turbine 1, a generator 151, and a heat exchanger 152. Note that the configurations of the combustion apparatus 70 and the turbine 1 are as previously described. The generator 151 is coupled to the turbine 1.

Further, the CO₂ gas turbine facility 150 includes a fuel supply pipe which supplies the fuel to the fuel supply part 102 of the combustor 100 in the combustion apparatus 70, an oxidant supply pipe which supplies the oxidant to the oxidant supply part 103 of the combustor 100 in the combustion apparatus 70, and a carbon dioxide circulation pipe which circulates the working fluid discharged from the turbine 1 through the combustion apparatus 70 and the turbine 1.

The fuel supply pipe is constituted of a pipe 160 which supplies the fuel to the fuel supply part 102 of the combustor 100. The pipe 160 is coupled to the fuel supply part 102. The pipe 160 includes a flow rate regulating valve 161 which regulates a flow rate of the fuel to be supplied to the combustor 100.

Here, as the fuel, for example, hydrocarbon such as methane or natural gas is used. Further, as the fuel, for example, a coal gasification gas fuel containing carbon monoxide, hydrogen, and the like can also be used. Note that the fuel is supplied from a fuel supply source (not illustrated).

The oxidant supply pipe is constituted of a pipe 170 which supplies the oxidant to the oxidant supply part 103 of the combustor 100. The pipe 170 is coupled to the oxidant supply part 103. The pipe 170 includes a flow rate regulating valve 171 which regulates a flow rate of the oxidant to be supplied to the combustor 100. Further, the pipe 170 is provided with a compressor 172 which pressurizes the oxidant.

The pipe 170 passes through in the heat exchanger 152 between the flow rate regulating valve 171 and the combustion apparatus 70 to be coupled to the oxidant supply part 103. The oxidant flowing through the pipe 170 is heated by passing through a heat exchanger 152 to be supplied to the combustor 100.

Incidentally, the flow rate regulating valve 171 is disposed between the compressor 172 and the heat exchanger 152, for example.

As the oxidant, for example, oxygen separated from the atmosphere by an air separating apparatus (not illustrated) is used.

The carbon dioxide circulation pipe includes a pipe 180 which circulates a part of the working fluid discharged from the turbine 1 through the combustion apparatus 70. That is, the pipe 180 functions as the carbon dioxide circulation pipe which circulates a part of the working fluid through the combustion apparatus 70.

Incidentally, the working fluid discharged from the turbine 1, which is mentioned here, is the one containing a combustion product produced by the fuel and the oxidant in the combustor 100 and the carbon dioxide circulated through the combustor 100 and the turbine 1.

The pipe 180 includes a condenser 181 and a compressor 182. The compressor 182 is disposed on the combustion apparatus 70 side further than the condenser 181.

The pipe 180 passes through in the heat exchanger 152 between the turbine 1 and the condenser 181, passes through in the heat exchanger 152 between the compressor 182 and the combustion apparatus 70 again, and is coupled to the cooling medium introduction pipe 83 connected to the cylinder body 120 in the combustor structure 90.

A drain pipe 183 which discharges water condensate generated in the condenser 181 to the outside is coupled to the pipe 180 between the condenser 181 and the compressor 182. The drain pipe 183 is disposed in the vicinity of the condenser 181, and includes a shutoff valve (not illustrated).

As previously described, in the combustion apparatus 70, the flow rates of the fuel and the oxidant are regulated so as to have a stoichiometric mixture ratio (equivalence ratio 1). Therefore, a component of the working fluid from which the water vapor has been removed in the condenser 181 is high-concentration carbon dioxide. Thus, here, the working fluid from which the water vapor has been removed is simply referred to as carbon dioxide.

Further, in the compressor 182, the carbon dioxide is pressurized to a critical pressure or more to become a supercritical fluid.

A pipe 186 which guides a part of carbon dioxide extracted from the middle of the pipe 180 located in the heat exchanger 152 to be circulated therethrough to the cooling medium introduction pipe 82 connected to the combustor casing 80, is coupled to the pipe 180. That is, one end of the pipe 186 is coupled to the pipe 180 in the heat exchanger 152, and the other end of the pipe 186 is coupled to the cooling medium introduction pipe 82.

The pipe 186 includes a flow rate regulating valve 187 which regulates a flow rate of the carbon dioxide to be introduced into the cooling medium introduction pipe 82.

Note that the pipe 186 which introduces the carbon dioxide into the cooling medium introduction pipe 82 also functions as a carbon dioxide circulation pipe.

Between the compressor 182 and the heat exchanger 152, a discharge pipe 184 which discharges a part of the supercritical carbon dioxide to the outside is coupled to the pipe 180. The discharge pipe 184 includes a flow rate regulating valve 185 which regulates a flow rate of the carbon dioxide to be discharged to the outside.

Note that the carbon dioxide discharged to the outside can be utilized for EOR (Enhanced Oil Recovery) employed at an oil drilling field, for example.

Further, a bypass pipe 188 which makes a part of the supercritical carbon dioxide bypass the heat exchanger 152 to guide it to the pipe 180 again is coupled to the pipe 180.

The bypass pipe 188 is coupled to the pipe 180 so that both ends of the bypass pipe 188 sandwich the heat exchanger 152. Specifically, one end of the bypass pipe 188 is coupled to the pipe 180 between the compressor 182 and the heat exchanger 152. The other end of the bypass pipe 188 is coupled to the pipe 180 between the heat exchanger 152 and the cooling medium introduction pipe 83. That is, the bypass pipe 188 does not pass through the heat exchanger 152.

The bypass pipe 188 includes a flow rate regulating valve 189 which regulates a flow rate of the carbon dioxide to bypass the heat exchanger 152.

Incidentally, the bypass pipe 188 functions as a fluid introduction pipe which introduces carbon dioxide at a lower temperature than a temperature of carbon dioxide flowing through the pipe 180 between the heat exchanger 152 and the cooling medium introduction pipe 83 into the pipe 180 being the carbon dioxide circulation pipe.

The CO₂ gas turbine facility 150 further includes a control unit 200 and sensing units 205A, 205B, 205C, as illustrated in Fig. 1 and Fig. 2.

The control unit 200 controls the flow rate regulating valve 189 based on sensed signals from the sensing units 205A, 205B, 205C. The control unit 200 is communicably connected to the sensing units 205A, 205B, 205C and the flow rate regulating valve 189. Note that the control unit 200 is also communicably connected to the other flow rate regulating valves.

The sensing units 205A, 205B, 205C are each constituted by, for example, a temperature sensing unit which senses a temperature. As the temperature sensing unit, for example, a thermocouple or the like is cited.

The sensing unit 205A is installed at an outlet of the combustor 100. For example, in Fig. 1, the sensing unit 205A is installed at an outlet of the combustor liner 101. The sensing unit 205A senses a temperature of the combustion gas at the outlet of the combustor 100.

Incidentally, the sensing unit 205A may be provided in a flow path in the transition piece 110. In this case, the sensing unit 205A is provided in the flow path in the transition piece 110 further downstream than the outlet of the combustor 100 and further upstream than the outlet of the transition piece 110.

The sensing unit 205B is installed at an inlet of the turbine stages. For example, in Fig. 1, the sensing unit 205B is installed at the outlet of the transition piece 110. The sensing unit 205B senses a temperature of the working fluid at the inlet of the turbine stages.

The sensing unit 205C is installed at an outlet of the initial-stage stator blade 42. The sensing unit 205C senses a temperature of the working fluid at the outlet of the initial-stage stator blade 42.

Incidentally, a sensing part is constituted of at least one of these sensing units 205A, 205B, 205C, for example.

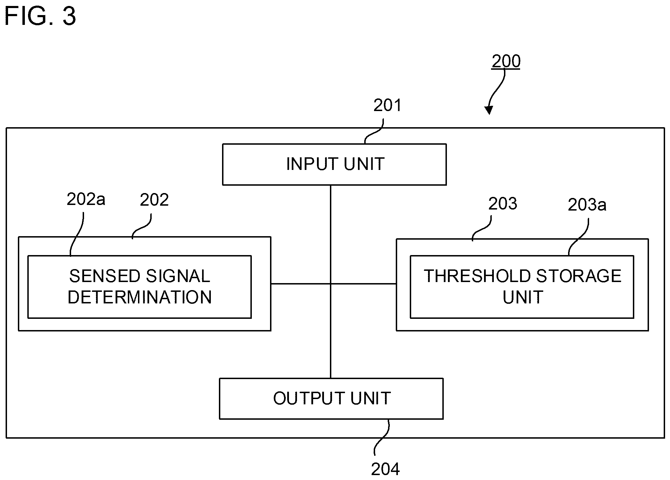

Here, Fig. 3 is a block diagram illustrating a configuration of the control unit 200 of a temperature reducing mechanism for the working fluid in the CO₂ gas turbine facility 150 of the first embodiment.

As illustrated in Fig. 3, the control unit 200 includes an input unit 201, a calculation unit 202, a storage unit 203, and an output unit 204.

The input unit 201 receives sensed signals from the sensing units 205A, 205B, 205C. Specifically, the input unit 201 receives the sensed signals from the temperature sensing units .

The storage unit 203 is constituted by a storage medium such as a read-only memory (ROM) or a random access memory (RAM). The storage unit 203 includes a threshold storage unit 203a.

The threshold storage unit 203a provides a reference value for determination in a sensed signal determination unit 202a of the calculation unit 202. The threshold storage unit 203a stores a temperature threshold value which is used as a reference for opening and closing the flow rate regulating valve 189, or the like.

Here, the respective temperature threshold values are set to correspond to the sensing units. That is, the respective temperature threshold values are set to correspond to the temperature sensing sections where the sensing units are installed. Further, the temperature threshold values are set to maximum limit temperatures allowable as temperatures at the temperature sensing sections where the sensing units are installed.

For example, in a case of being controlled based on the sensed signal from the sensing unit 205A, the temperature threshold value is set to a maximum limit temperature allowable as a temperature at the outlet of the combustor 100. For example, in a case of being controlled based on the sensed signal from the sensing unit 205B, the temperature threshold value is set to a maximum limit temperature allowable as a temperature at the inlet of the turbine stages (the outlet of the transition piece 110). For example, in a case of being controlled based on the sensed signal from the sensing unit 205C, the temperature threshold value is set to a maximum limit temperature allowable as a temperature at the outlet of the initial-stage stator blade 42.

When the temperature at the temperature sensing section exceeds the temperature threshold value, the flow rate regulating valve 189 is opened at a predetermined opening degree, and when the temperatures at the temperature sensing sections are below the temperature threshold values, the flow rate regulating valve 189 is closed.

The calculation unit 202 executes various kinds of calculation processing by using programs, data, or the like stored in the storage unit 203, for example. The calculation unit 202 includes a sensed signal determination unit 202a.

The sensed signal determination unit 202a determines, based on the sensed signals from the sensing units 205A, 205B, 205C, whether or not to exceed the temperature threshold value used as the reference for opening and closing the flow rate regulating valve 189. Then, the sensed signal determination unit 202a outputs a control signal for opening the flow rate regulating valve 189 or a control signal to close the flow rate regulating valve 189 to the output unit 204.

The output unit 204 outputs the control signal for opening the flow rate regulating valve 189 or the control signal to close the flow rate regulating valve 189, which is output from the sensed signal determination unit 202a, to the flow rate regulating valve 189.

Here, the processing to be executed by the above-described control unit 200 is implemented by a computer device or the like, for example.

Here, for comparison, a system of a conventional CO₂ gas turbine facility will be described.

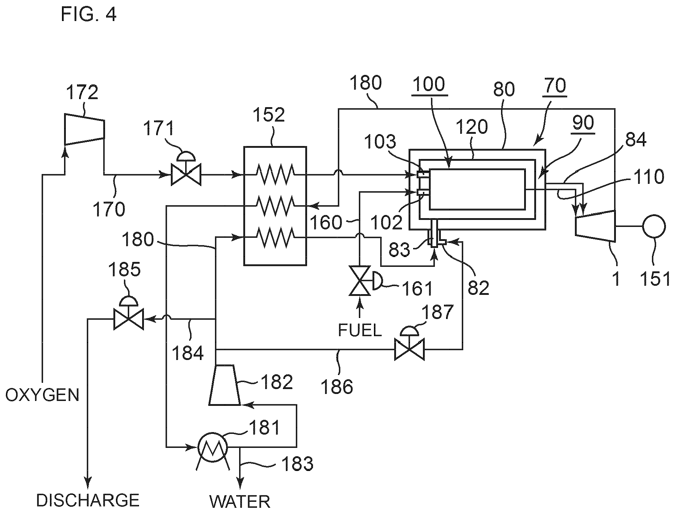

Fig. 4 is a system diagram of the conventional CO₂ gas turbine facility. Note that, here, the same constituent portions as those of the configuration of this embodiment are denoted by the same reference signs, and redundant explanations are omitted.

As illustrated in Fig. 4, the conventional CO₂ gas turbine facility does not include a bypass pipe 188 which bypasses a heat exchanger 152 from a pipe 180 between a compressor 182 and the heat exchanger 152 to guide carbon dioxide to the pipe 180 again. Therefore, the conventional CO₂ gas turbine facility does not have a system of controlling a flow rate of carbon dioxide flowing through the bypass pipe 188 either.

Therefore, in the conventional CO₂ gas turbine facility, for example, even when a temperature of a working fluid at an inlet of a working fluid flow path 46 exceeds a threshold value, a cooling medium (carbon dioxide) is introduced via the pipe 180 and a pipe 186 into a combustion apparatus 70 under planned conditions set beforehand based on conditions at the time of normal operation. Accordingly, the temperature of the working fluid cannot be reduced in a turbine 1.

Next, the operation of the CO₂ gas turbine facility 150 of the first embodiment will be described in reference to Fig. 1 and Fig. 2.

Here, the description is started from a flow of the working fluid exhausted from the turbine 1.

As illustrated in Fig. 2, the working fluid discharged from the turbine 1 is guided to the pipe 180, and passes through the heat exchanger 152 to be thereby cooled. At this time, by heat release from the working fluid, the oxidant flowing through the pipe 170 and the carbon dioxide flowing through the pipe 180 to be circulated through the combustion apparatus 70 are heated.

The working fluid having passed through the heat exchanger 152 passes through the condenser 181. Water vapor contained in the working fluid is removed therefrom by passing through the condenser 181. The working fluid from which the water vapor has been removed becomes high-concentration carbon dioxide. Note that it is also possible to regulate a temperature of the working fluid in the condenser 181.

At this time, the water vapor in the working fluid is condensed into water. This water is discharged through the drain pipe 183 to the outside.

The carbon dioxide is pressurized to a pressure equal to or more than a critical pressure to become a supercritical fluid by the compressor 182 interposed on the pipe 180.

The carbon dioxide at the pressure equal to or more than a critical pressure passes through the pipe 180 to be heated in the heat exchanger 152. Then, the carbon dioxide flowing through the pipe 180 is guided to the cooling medium introduction pipe 83 of the combustion apparatus 70 as the cooling medium.

Here, the carbon dioxide guided to the cooling medium introduction pipe 83 is referred to as the cooling medium. Note that the action of the cooling medium guided to the cooling medium introduction pipe 83 is described later.

Further, a part of the carbon dioxide pressurized to a pressure equal to or more than a critical pressure by the compressor 182 passes through the pipe 186 to be guided to cooling medium introduction pipe 82 of the combustion apparatus 70 as the cooling medium. Note that a flow rate of the carbon dioxide to be guided to the cooling medium introduction pipe 82 is regulated by the flow rate regulating valve 187.

Here, the carbon dioxide guided to the cooling medium introduction pipe 82 is referred to as the cooling medium. Note that the action of the cooling medium guided to the cooling medium introduction pipe 82 is described later.

Here, a temperature of the carbon dioxide guided to the cooling medium introduction pipe 83 of the combustion apparatus 70 as the cooling medium is higher than a temperature of the carbon dioxide guided to the cooling medium introduction pipe 82 of the combustion apparatus 70 as the cooling medium.

Further, a part of the carbon dioxide pressurized to a pressure equal to or more than a critical pressure by the compressor 182 passes through the discharge pipe 184 to be discharged to the outside. Note that a flow rate of the carbon dioxide to be discharged is regulated by the flow rate regulating valve 185.

Here, based on the sensed signals from the previously-described sensing units 205A, 205B, 205C, when the temperatures at the temperature sensing sections are below the temperature threshold values, the flow rate regulating valve 189 is closed, and the carbon dioxide does not flow through the bypass pipe 188.

On the other hand, based on the sensed signals from the previously-described sensing units 205A, 205B, 205C, when the temperature at the temperature sensing sections exceeds the temperature threshold value, the flow rate regulating valve 189 is opened, and the carbon dioxide flows through the bypass pipe 188.

When the carbon dioxide flows through the bypass pipe 188, there is no change in the flow rate of the carbon dioxide guided to the cooling medium introduction pipe 82.

On the other hand, a temperature of the carbon dioxide bypassed from the bypass pipe 188 to the pipe 180 is lower than a temperature of the carbon dioxide flowing through the pipe 180 to be heated by passing through the heat exchanger 152. Therefore, by mixing the carbon dioxide flowing through the bypass pipe 188 with the carbon dioxide flowing through the pipe 180 and heated in the heat exchanger 152, the temperature of the carbon dioxide guided to the cooling medium introduction pipe 83 is reduced.

Next, the action of the cooling medium guided to each of the cooling medium introduction pipe 83 and the cooling medium introduction pipe 82 and the operation of the combustor 100 will be described.

The cooling medium guided through the pipe 180 to the cooling medium introduction pipe 83 is introduced into the interior of the cylinder body 120, as illustrated in Fig. 1. The cooling medium introduced into the cylinder body 120 flows between the cylinder body 120, and, the combustor liner 101 and the transition piece 110 to the initial-stage stator blade 42 side. At this time, the combustor liner 101 and the transition piece 110 are cooled.

Here, in the combustor 100, the fuel is ejected through the pipe 160 from the fuel supply part 102 into the combustor liner 101. Further, the oxidant is ejected through the pipe 170 from the oxidant supply part 103 to the combustor liner 101.

Then, the fuel and the oxidant ejected into the combustor liner 101 undergo reaction (combustion), and are turned into a combustion gas. The combustion gas discharged from the combustor liner 101 is ejected through the transition piece 110 to the initial-stage stator blade 42, as illustrated in Fig. 1.

The above-described cooling medium flowing between the cylinder body 120, and, the combustor liner 101 and the transition piece 110 flows from the introduction holes 101c of the combustor liner 101 and the introduction holes 110a of the transition piece 110 into the interior of the combustor liner 101 and the interior of the transition piece 110, as illustrated in Fig. 1.

The cooling medium flows into the interior of the combustor liner 101 and the interior of the transition piece 110, thereby diluting the combustion gas, and reducing a temperature of the combustion gas.

The working fluid ejected from the outlet of the transition piece 110 (the outlet 112 of the annular flow path portion 111) flows through the working fluid flow path 46 being a main flow path including the stator blades and the rotor blades. The turbine 1 is rotationally moved by expansion work of the working fluid flowing through the working fluid flow path 46. Then, by rotationally moving the turbine 1, the generator 151 is driven to generate electricity.

The cooling medium guided through the pipe 186 to the cooling medium introduction pipe 82 passes through an annular passage around the cooling medium introduction pipe 83 to be introduced into the space 84, as illustrated in Fig. 1. The cooling medium introduced into the space 84 flows into the turbine 1. The cooling medium flowing into the turbine 1 flows between the cylinder body 120 and the sleeve 13 toward the radial inside, and flows into the space 22 in the inner casing 20.

Here, the cooling medium guided through the pipe 186 to the cooling medium introduction pipe 82 flows from the space 84 in the combustor casing 80 into the space 22 in the inner casing 20, in Fig. 1. This cooling medium mainly cools constituent members of the turbine 1. That is, the pipe 186 functions as the carbon dioxide circulation pipe which circulates the cooling medium through the turbine 1.

Note that, here, there is indicated one example of introducing the cooling medium for cooling the turbine 1 from the space 84 in the combustor casing 80 into the space 22 in the inner casing 20, but this configuration is not restrictive.

For example, the cooling medium introduction pipe 82 may be provided for the turbine 1 to introduce the cooling medium from the pipe 186 into the cooling medium introduction pipe 82. Also in this case, the pipe 186 functions as the carbon dioxide circulation pipe which circulates the cooling medium through the turbine 1.

A part of the cooling medium guided to the space 22 flows from the inlet 34a into the introduction passage 34. The carbon dioxide flowing into the introduction passage 34 flows into the axial passage 35.

The cooling medium flowing into the axial passage 35 flows toward the downstream side in the axial direction. The cooling medium flowing through the axial passage 35 toward the downstream side in the axial direction flows into the discharge passages 36.

The cooling medium flowing into the discharge passage 36 is ejected from the outlet 36a of the discharge passage 36 to the space 45.

Here, the rotor body portion 31 (turbine rotor 30) is cooled from the inside thereof by making the cooling medium flow through the introduction passage 34, the axial passage 35, and the discharge passages 36.

The cooling medium ejected to the space 45 flows from a gap between the heat shield piece 43 and the turbine disk 32 and a gap between the inner shroud 41 and the turbine disk 32 into the working fluid flow path 46.

The cooling medium flowing into the working fluid flow path 46 flows through the working fluid flow path 46 together with the working fluid to be discharged to the exhaust hood 60. Here, the working fluid flowing through the working fluid flow path 46 is diluted by the cooling medium flowing into the working fluid flow path 46, resulting in reducing a temperature of the working fluid.

Further, a part of the cooling medium guided to the space 22 flows from a gap between an initial-stage turbine disk 32, and, an initial-stage heat shield piece 43 and the inner shroud 41 into the working fluid flow path 46. That is, at the initial stage, the cooling medium is ejected to the working fluid flow path 46 between the stator blade 42 and the rotor blade 50. The cooling medium flowing into the working fluid flow path 46 flows through the working fluid flow path 46 together with the working fluid to be discharged to the exhaust hood 60.

This causes the working fluid flowing through the working fluid flow path 46 to be diluted by the cooling medium flowing into the working fluid flow path 46, resulting in reducing the temperature of the working fluid.

Further, a part of the cooling medium guided to the space 22 flows into the introduction passage 21 formed in the inner casing 20. The cooling medium flowing into the introduction passage 21 is guided to the interior of the outer shroud 40. The cooling medium after being guided to the interior of the outer shroud 40 is guided into the stator blade 42 to cool the stator blade 42.

The cooling medium guided into the stator blade 42 is ejected from an ejection hole (not illustrated) provided for a blade effective part of the stator blade 42, or the like to the working fluid flow path 46, for example. The cooling medium flowing into the working fluid flow path 46 flows through the working fluid flow path 46 together with the working fluid to be discharged to the exhaust hood 60.

This causes the working fluid flowing through the working fluid flow path 46 to be diluted by the cooling medium flowing into the working fluid flow path 46, resulting in reducing the temperature of the working fluid.

Moreover, the remaining part of the cooling medium guided to the space 22 flows through the sealing portion 44 between the inner shroud 41 and the heat shield piece 43 to the downstream side. Further, the remaining part of the cooling medium guided to the space 22 flows through the gland seal parts 55, 56a toward the outside of the turbine 1.

The above-described cooling effect on the working fluid due to the cooling medium guided to the space 22 can be obtained steadily at the time of operation of the CO₂ gas turbine facility 150. Here, at the time of normal operation in the previously-described state where load variations in the combustor, a temperature rise of circulating carbon dioxide, and so on do not occur, the above-described steady cooling effect can be obtained. Here, a later-described temperature reducing mechanism for the working fluid in the CO₂ gas turbine facility 150 is not used.

Next, the temperature reducing mechanism for the working fluid in the CO₂ gas turbine facility 150 of the first embodiment will be described in reference to Fig. 1 to Fig. 3, and Fig. 5.

Operating the temperature reducing mechanism for the working fluid to introduce a low-temperature fluid (carbon dioxide) from the bypass pipe 188 being the fluid introduction pipe into the pipe 180 being the carbon dioxide circulation pipe makes it possible to further obtain a cooling effect due to the fluid introduced from the bypass pipe 188 in addition to the above-described steady cooling effect due to the cooling medium.

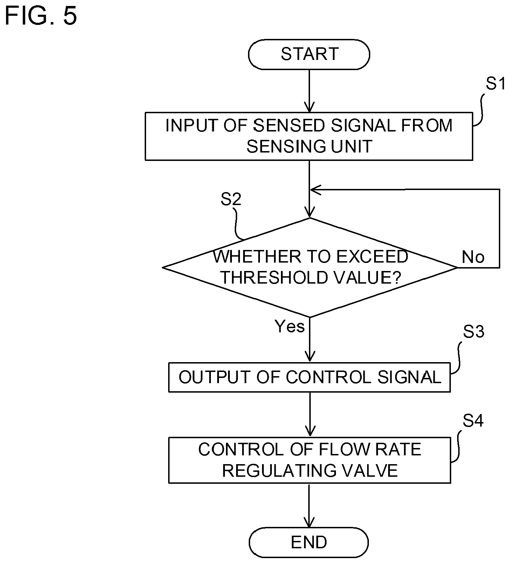

Here, Fig. 5 is a flowchart explaining the operation based on the sensed signals from the sensing units 205A, 205B, 205C in the temperature reducing mechanism for the working fluid in the CO₂ gas turbine facility 150 of the first embodiment. Note that, here, a case of including the sensing unit 205A is exemplified and described, and the similar control is also executed in cases of including the other sensing units 205B, 205C. Further, the similar control is also executed in a case of including a plurality of sensing units.

In the previously-described operation of the CO₂ gas turbine facility 150, the control unit 200 receives the sensed signal constantly from the sensing unit. Note that at a start time, the flow rate regulating valve 189 is set to be closed.

As illustrated in Fig. 5, the input unit 201 receives the sensed signal from the sensing unit 205A (Step S1).

The sensed signal determination unit 202a determines, based on the sensed signal received by the input unit 201 and the temperature threshold value stored in the threshold storage unit 203a, whether or not a sensed temperature exceeds the temperature threshold value (Step S2).

Here, in the case of including the plurality of sensing units, the sensed signal determination unit 202a executes the determination in Step S2 with respect to the sensed signals from the sensing units.

When the sensed signal determination unit 202a determines not to exceed the temperature threshold value in the determination in Step S2 (No in Step S2), the sensed signal determination unit 202a executes the processing in Step S2 again.

When the sensed signal determination unit 202a determines to exceed the temperature threshold value in the determination in Step S2 (Yes in Step S2), the sensed signal determination unit 202a outputs the control signal for opening the flow rate regulating valve 189 to the output unit 204 (Step S3).

Here, in the case of including the plurality of sensing units, when the determination based on the sensed signal from any of the sensing units exceeds the temperature threshold value, the processing in Step S3 is executed.

The output unit 204 outputs the control signal from the sensed signal determination unit 202a to the flow rate regulating valve 189 to open the flow rate regulating valve 189 (Step S4).

Incidentally, opening the flow rate regulating valve 189 in Step S4 allows the low-temperature carbon dioxide to be introduced from the bypass pipe 188 bypassing the heat exchanger 152 into the pipe 180 again.

Here, the control illustrated in Fig. 5 is constantly performed. Then, after opening the flow rate regulating valve 189, when the sensed signal determination unit 202a determines not to exceed the temperature threshold value in the determination in Step S2 (No in Step S2), the sensed signal determination unit 202a outputs the control signal for closing the flow rate regulating valve 189 to the output unit 204.

Then, the output unit 204 outputs the control signal from the sensed signal determination unit 202a to the flow rate regulating valve 189 to close the flow rate regulating valve 189.

Further, for example, even after a predetermined time has passed since opening the flow rate regulating valve 189, when a temperature based on the sensed signal does not reach the temperature threshold value or less, the sensed signal determination unit 202a may output the control signal to further open a valve opening degree of the flow rate regulating valve 189 to the output unit 204.

In this case, the output unit 204 outputs the control signal from the sensed signal determination unit 202a to the flow rate regulating valve 189 to further open the flow rate regulating valve 189.

As described above, the temperature reducing mechanism for the working fluid in the CO₂ gas turbine facility 150 of the first embodiment includes the control unit 200, the sensing units 205A, 205B, 205C, the bypass pipe 188, and the flow rate regulating valve 189.

Then, in the temperature reducing mechanism for the working fluid, the control unit 200 controls the flow rate regulating valve 189 based on the sensed signals from the sensing units 205A, 205B, 205C to control a flow rate of the low-temperature carbon dioxide to be introduced via the bypass pipe 188 into the pipe 180.

That is, the temperature reducing mechanism for the working fluid controls the flow rate of the low-temperature carbon dioxide to be introduced via the bypass pipe 188 into the pipe 180, thereby reducing the temperature of the carbon dioxide guided to the cooling medium introduction pipe 83 as the cooling medium.

In the CO₂ gas turbine facility 150 of the first embodiment, when the temperature of the working fluid at the temperature sensing sections where the sensing units are installed exceeds the temperature threshold value, the low-temperature carbon dioxide can be introduced from the bypass pipe 188 bypassing the heat exchanger 152 into the pipe 180 again.

This makes it possible to reduce the temperature of the carbon dioxide guided to the cooling medium introduction pipe 83. That is, a temperature of the cooling medium flowing into the interior of the combustor liner 101 and the transition piece 110 becomes lower than a temperature of the cooling medium at the time of closing the flow rate regulating valve 189 (at the time of normal operation).

Therefore, a temperature of the combustion gas (working fluid) flowing in the combustor liner 101 and the transition piece 110 when the temperature reducing mechanism for the working fluid is operated becomes lower than a temperature of the combustion gas (working fluid) flowing in the combustor liner 101 and the transition piece 110 at the time of normal operation.

This causes a reduction in a temperature of the working fluid ejected from the transition piece 110 to the initial-stage stator blade 42. Therefore, it is possible to prevent the working fluid at a temperature exceeding a heat-resistant limit of the constituent members of the turbine from flowing through the main flow path in the turbine. Note that the main flow path in the turbine includes the working fluid flow path 46 and the exhaust hood 60.

Here, in the CO₂ gas turbine facility 150, as previously described, at the start time, for example, due to factors such as the load variations in the combustor and the temperature rise of the circulating carbon dioxide, it is assumed that a temperature of the working fluid at a turbine inlet rises more than a planned value. Therefore, it is mainly at the start time that the temperature of the working fluid is required to be reduced.

In general, when the temperature of the working fluid introduced into the working fluid flow path 46 of the turbine 1 is reduced, thermal efficiency is decreased. However, it is basically at the start time that the temperature reducing mechanism for the working fluid is used in the CO₂ gas turbine facility 150 of this embodiment. Then, this temperature reducing mechanism for the working fluid is not used under load conditions later than the start time.

Therefore, in the CO₂ gas turbine facility 150 of this embodiment, conventional thermal efficiency can be maintained under the load conditions later than the start time while suppressing a rise in temperature of the working fluid at more than a planned temperature at the start time.

Further, according to the CO₂ gas turbine facility 150 of this embodiment, it is possible to prevent the working fluid at the temperature exceeding the heat-resistant limit of the constituent members of the turbine from flowing through the main flow path in the turbine. This makes it possible to avoid damage of the constituent members of the turbine, or the like.

### (Other modes of CO₂ gas turbine facilities in First embodiment)

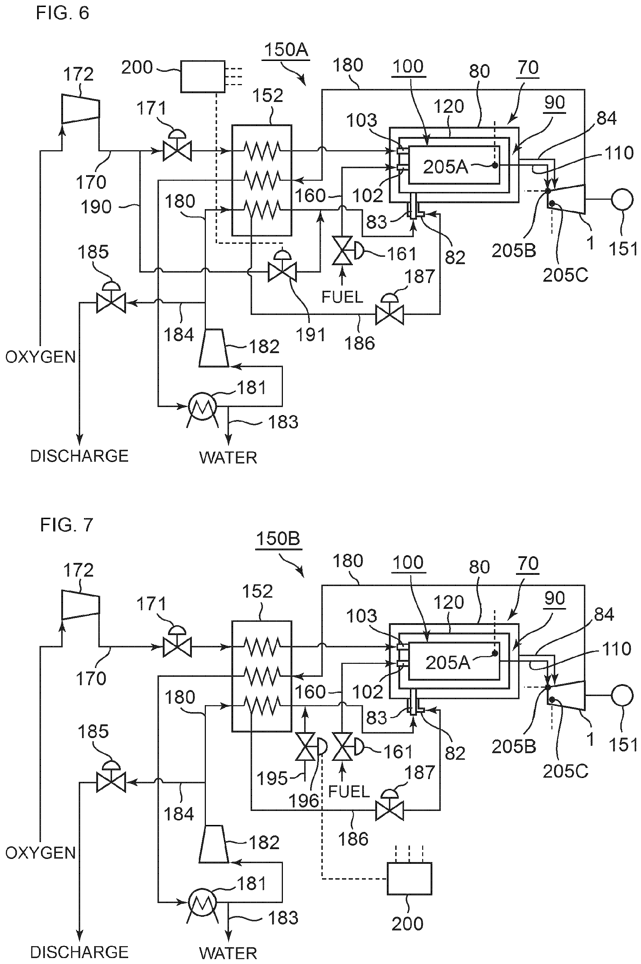

Fig. 6 and Fig. 7 are system diagrams of CO₂ gas turbine facilities 150A, 150B for explaining the other modes in the first embodiment.

As illustrated in Fig. 6, in place of the bypass pipe 188, a pipe 190 which introduces the oxidant into the pipe 180 may be included. One end of the pipe 190 is coupled to the pipe 170 between the compressor 172 and the flow rate regulating valve 171. The other end of the pipe 190 is coupled to the pipe 180 between the heat exchanger 152 and the cooling medium introduction pipe 83.

The pipe 190 includes a flow rate regulating valve 191 which regulates a flow rate of the oxidant to be introduced into the pipe 180.

Here, a temperature of the oxidant flowing through the pipe 190 is lower than a temperature of the carbon dioxide flowing through the pipe 180 and heated in the heat exchanger 152.

Incidentally, the pipe 190 functions as a fluid introduction pipe which introduces the oxidant at a lower temperature than a temperature of the carbon dioxide flowing through the pipe 180 between the heat exchanger 152 and the cooling medium introduction pipe 83 into the pipe 180 being the carbon dioxide circulation pipe.

A temperature reducing mechanism for the working fluid in the CO₂ gas turbine facility 150A illustrated in Fig. 6 includes the control unit 200, the sensing units 205A, 205B, 205C, the pipe 190, and the flow rate regulating valve 191.

Then, the control unit 200 controls the flow rate regulating valve 191 based on sensed signals from the sensing units 205A, 205B, 205C to control the flow rate of the low-temperature oxidant to be introduced via the pipe 190 into the pipe 180.

Incidentally, the operation in the temperature reducing mechanism for the working fluid is similar to the operation in the temperature reducing mechanism for the working fluid illustrated in Fig. 5.

According to the CO₂ gas turbine facility 150A, including the pipe 190 causes the low-temperature oxidant to be mixed with the carbon dioxide heated in the heat exchanger 152 to constitute the cooling medium composed of the carbon dioxide and the oxidant. This makes it possible to reduce a temperature of the cooling medium guided to the cooling medium introduction pipe 83.

Moreover, according to the CO₂ gas turbine facility 150A, since the oxidant introduced from the pipe 190 is added to the carbon dioxide flowing through the pipe 180, it is possible to increase a flow rate of the cooling medium to be guided to the cooling medium introduction pipe 83. This causes an increase in a flow rate of the cooling medium flowing into the interior of the combustor liner 101 and the transition piece 110, resulting in enabling a further reduction in the temperature of the combustion gas (working fluid) flowing in the combustor liner 101 and the transition piece 110.

This also makes it possible to obtain the operation and effect of reducing the temperature of the working fluid in the CO₂ gas turbine facility 150A similarly to the operation and effect in the CO₂ gas turbine facility 150 illustrated in Fig. 2.

As illustrated in Fig. 7, in place of the bypass pipe 188, a pipe 195 which introduces a fluid functioning as the cooling medium from another supply source into the pipe 180 may be included. One end of the pipe 195 is coupled to the other supply source, and the other end of the pipe 195 is coupled to the pipe 180 between the heat exchanger 152 and the cooling medium introduction pipe 83.

The pipe 195 includes a flow rate regulating valve 196 which regulates a flow rate of the cooling medium to be introduced into the pipe 180.

Here, a temperature of the cooling medium flowing through the pipe 195 is lower than the temperature of the carbon dioxide flowing through the pipe 180 and heated in the heat exchanger 152.

Incidentally, the pipe 195 functions as a fluid introduction pipe which introduces the fluid at a lower temperature than the temperature of the carbon dioxide flowing through the pipe 180 between the heat exchanger 152 and the cooling medium introduction pipe 83 into the pipe 180 being the carbon dioxide circulation pipe.

Incidentally, as the other supply source, for example, a part of a system illustrated in Fig. 7, or the like can be cited. Further, as the other supply source, a part of a system in another attached CO₂ gas turbine facility, or the like can be cited. In these cases, the fluid introduced from the pipe 195 into the pipe 180 is supercritical carbon dioxide. Further, as the other supply source, a tank filled with supercritical carbon dioxide, or the like can also be cited.

A temperature reducing mechanism for the working fluid in the CO₂ gas turbine facility 150B illustrated in Fig. 7 includes the control unit 200, the sensing units 205A, 205B, 205C, the pipe 195, and the flow rate regulating valve 196.

Then, the control unit 200 controls the flow rate regulating valve 196 based on sensed signals from the sensing units 205A, 205B, 205C to control the flow rate of the low-temperature fluid to be introduced via the pipe 195 into the pipe 180.

Incidentally, the operation in the temperature reducing mechanism for the working fluid is similar to the operation in the temperature reducing mechanism for the working fluid illustrated in Fig. 5.

According to the CO₂ gas turbine facility 150B, including the pipe 195 causes the low-temperature fluid to be mixed with the carbon dioxide heated in the heat exchanger 152 to constitute the cooling medium composed of the carbon dioxide and the fluid. This makes it possible to reduce a temperature of the cooling medium guided to the cooling medium introduction pipe 83.

Moreover, according to the CO₂ gas turbine facility 150B, since the fluid introduced from the pipe 195 is added to the carbon dioxide flowing through the pipe 180, it is possible to increase a flow rate of the cooling medium to be guided to the cooling medium introduction pipe 83. This also allows the effect of reducing the temperature of the working fluid to be obtained.

This causes an increase in a flow rate of the cooling medium flowing into the interior of the combustor liner 101 and the transition piece 110, resulting in enabling a further reduction in the temperature of the combustion gas (working fluid) flowing in the combustor liner 101 and the transition piece 110.

This also makes it possible to obtain the operation and effect of reducing the temperature of the working fluid in the CO₂ gas turbine facility 150B similarly to the operation and effect in the CO₂ gas turbine facility 150 illustrated in Fig. 2.

### (Second embodiment)

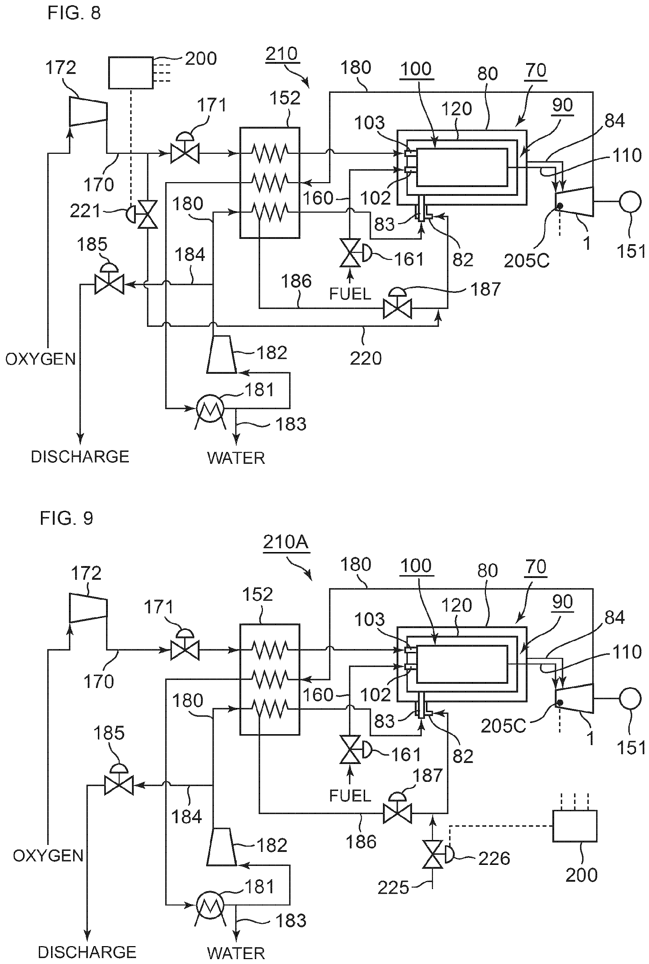

Fig. 8 is a system diagram of a CO₂ gas turbine facility 210 of a second embodiment. Note that, in the following embodiment, the same constituent portions as those of the CO₂ gas turbine facility 150 of the first embodiment are denoted by the same reference signs, and redundant explanations are omitted or simplified.

The CO₂ gas turbine facility 210 of the second embodiment has the same configuration as that of the CO₂ gas turbine facility 150 of the first embodiment except a configuration of a temperature reducing mechanism for a working fluid. Further, configurations of a turbine 1 and a combustor 70 included in the CO₂ gas turbine facility 210 of the second embodiment are the same as the configurations thereof illustrated in Fig. 1.

Therefore, the configuration of the temperature reducing mechanism for the working fluid is mainly described here.

The temperature reducing mechanism for the working fluid in the CO₂ gas turbine facility 210 includes a control unit 200, a sensing unit 205C, a pipe 220, and a flow rate regulating valve 221. The control unit 200 is communicably connected to the sensing unit 205C and the flow rate regulating valve 221.

Incidentally, here, as a sensing part, there is indicated one example of using the sensing unit 205C which senses a temperature of the working fluid at an outlet of an initial-stage stator blade 42. Further, as the sensing part, the other sensing units indicated in the first embodiment may be used.

As illustrated in Fig. 8, one end of the pipe 220 is coupled to a pipe 170 between a compressor 172 and a flow rate regulating valve 171. The other end of the pipe 220 is coupled to a pipe 186 between a flow rate regulating valve 187 and a cooling medium introduction pipe 82.

The pipe 220 includes a flow rate regulating valve 221 which regulates a flow rate of an oxidant to be introduced into the pipe 186.

A temperature of the oxidant flowing through the pipe 220 is the same as a temperature of carbon dioxide flowing through the pipe 186 at the time of rated operation or lower than the temperature thereof.

The pipe 220 functions as a fluid introduction pipe which introduces the oxidant at the same temperature as a rated temperature of the carbon dioxide flowing through the pipe 186 at the time of rated operation or at a lower temperature than the rated temperature into the pipe 186 being a carbon dioxide circulation pipe.

Here, the time of rated operation means the time of rated operation of the CO₂ gas turbine facility 210. A temperature of the carbon dioxide flowing through the pipe 186 becomes the highest at the time of rated operation. Note that a maximum temperature of the carbon dioxide flowing through the pipe 186 is a sufficiently low temperature as compared with a temperature of the working fluid introduced into the turbine 1.

Therefore, even though a temperature of the oxidant introduced into the pipe 186 is the same temperature as, for example, the maximum temperature of the carbon dioxide flowing through the pipe 186, the oxidant flows into a working fluid flow path 46 as a cooling medium together with the carbon dioxide, thereby enabling a reduction in the temperature of the working fluid.

The control unit 200 controls the flow rate regulating valve 221 based on a sensed signal from the sensing unit 205C to control the flow rate of the oxidant to be introduced via the pipe 220 into the pipe 186.

Incidentally, the operation in the temperature reducing mechanism for the working fluid is similar to the operation in the temperature reducing mechanism for the working fluid illustrated in Fig. 5.

In the CO₂ gas turbine facility 210 of the second embodiment, when a temperature of the working fluid at a temperature sensing section where the sensing unit 205C is installed exceeds a temperature threshold value, the oxidant can be introduced from the pipe 220 into the pipe 186.

Introducing the oxidant from the pipe 220 into the pipe 186 leads to an increase in a flow rate of the cooling medium to be guided to the cooling medium introduction pipe 82. This causes an increase in a flow rate of the cooling medium flowing into the space 22 in the inner casing 20 in Fig. 1 as compared with the time when the flow rate regulating valve 221 is closed (the time of normal operation), when the temperature reducing mechanism for the working fluid is operated.

Therefore, a flow rate of the cooling medium flowing into the working fluid flow path 46 after cooling constituent members of the turbine (turbine rotor 30, initial-stage stator blade 42) is increased. Note that the constituent members of the turbine cooled by the cooling medium flowing into the space 22 in the inner casing 20 are as previously described in reference to Fig. 1.

This causes a reduction in a temperature of the working fluid flowing through the working fluid flow path 46 when the temperature reducing mechanism for the working fluid is operated. Therefore, it is possible to prevent the working fluid at a temperature exceeding a heat-resistant limit of the constituent members of the turbine from flowing through a main flow path in the turbine.

Moreover, when the temperature of the oxidant guided from the pipe 220 is lower than the temperature of the carbon dioxide flowing through the pipe 186, a temperature of the cooling medium guided to the cooling medium introduction pipe 82 is reduced.

This causes a reduction in a temperature of and the increase in the flow rate of the cooling medium flowing into the space 22 in the inner casing 20 in Fig. 1 as compared with the time when the flow rate regulating valve 221 is closed (the time of normal operation), when the temperature reducing mechanism for the working fluid is operated.

Therefore, a temperature of the cooling medium flowing into the working fluid flow path 46 after cooling the constituent members of the turbine (turbine rotor 30, initial-stage stator blade 42) is reduced. Moreover, the flow rate of the cooling medium flowing into the working fluid flow path 46 after cooling the constituent members of the turbine is increased.

This causes the reduction in the temperature of the working fluid flowing through the working fluid flow path 46 when the temperature reducing mechanism for the working fluid is operated. Therefore, it is possible to prevent the working fluid at a temperature exceeding the heat-resistant limit of the constituent members of the turbine from flowing through the main flow path in the turbine.

### (Other mode of CO2 gas turbine facility in Second embodiment)

Fig. 9 is a system diagrams of a CO₂ gas turbine facilities 210A for explaining the other mode in the second embodiment.

As illustrated in Fig. 9, in place of the pipe 220, a pipe 225 which introduces a fluid functioning as the cooling medium from another supply source into the pipe 186 may be included. One end of the pipe 225 is coupled to the other supply source. The other end of the pipe 225 is coupled to the pipe 186 between the flow rate regulating valve 187 and the cooling medium introduction pipe 82.

The pipe 225 includes a flow rate regulating valve 226 which regulates a flow rate of the cooling medium to be introduced into the pipe 186.

Here, a temperature of the cooling medium flowing through the pipe 225 is the same as the temperature of the carbon dioxide flowing through the pipe 186 at the time of rated operation or lower than the temperature thereof.

Incidentally, the pipe 225 functions as a fluid introduction pipe which introduces the oxidant at the same temperature as a rated temperature of the carbon dioxide flowing through the pipe 186 at the time of rated operation or at a lower temperature than the rated temperature into the pipe 186 being the carbon dioxide circulation pipe.

Incidentally, the other supply source and the cooling medium supplied from the other supply source are the same as the other supply source and the cooling medium supplied from the other supply source in the embodiment illustrated in Fig. 7.

A temperature reducing mechanism for the working fluid in the CO₂ gas turbine facility 210A illustrated in Fig. 9 includes the control unit 200, the sensing unit 205C, the pipe 225, and the flow rate regulating valve 226.

Then, the control unit 200 controls the flow rate regulating valve 226 based on a sensed signal from the sensing unit 205C to control the flow rate of the cooling medium to be introduced via the pipe 225 into the pipe 186.

Incidentally, the operation in the temperature reducing mechanism for the working fluid is similar to the operation in the temperature reducing mechanism for the working fluid illustrated in Fig. 5.

In the CO₂ gas turbine facility 210A, introducing the cooling medium from the pipe 225 into the pipe 186 leads to the increase in the flow rate of the cooling medium to be guided to the cooling medium introduction pipe 82.

Further, when the temperature of the cooling medium introduced from the pipe 225 is lower than the temperature of the carbon dioxide flowing through the pipe 186, the temperature of the cooling medium guided to the cooling medium introduction pipe 82 can be reduced.

Incidentally, also in the CO₂ gas turbine facility 210A, the operation and effect of reducing the temperature of the working fluid can be obtained similarly to the operation and effect in the CO₂ gas turbine facility 210 illustrated in Fig. 8.

### (Third embodiment)

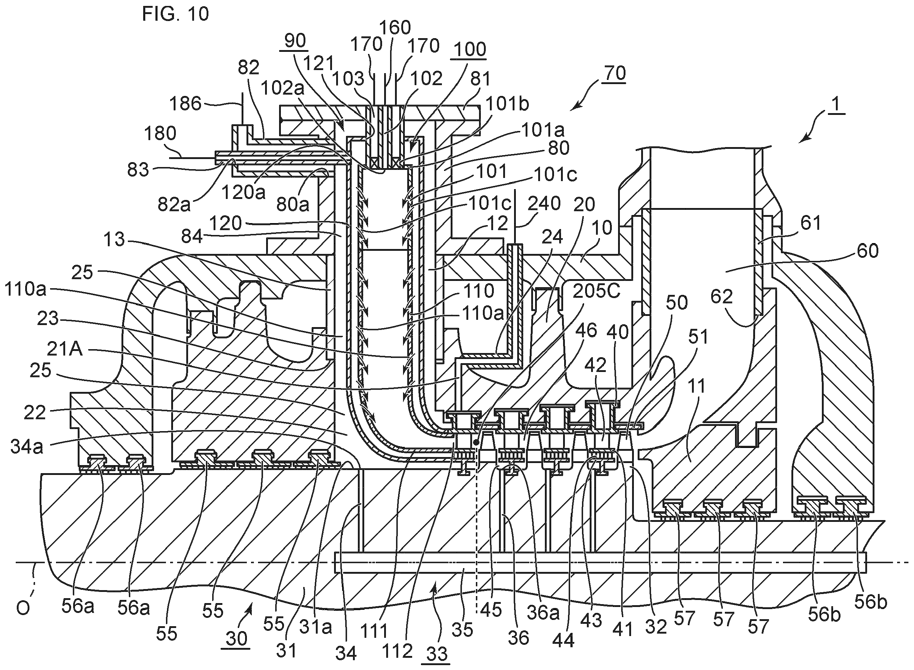

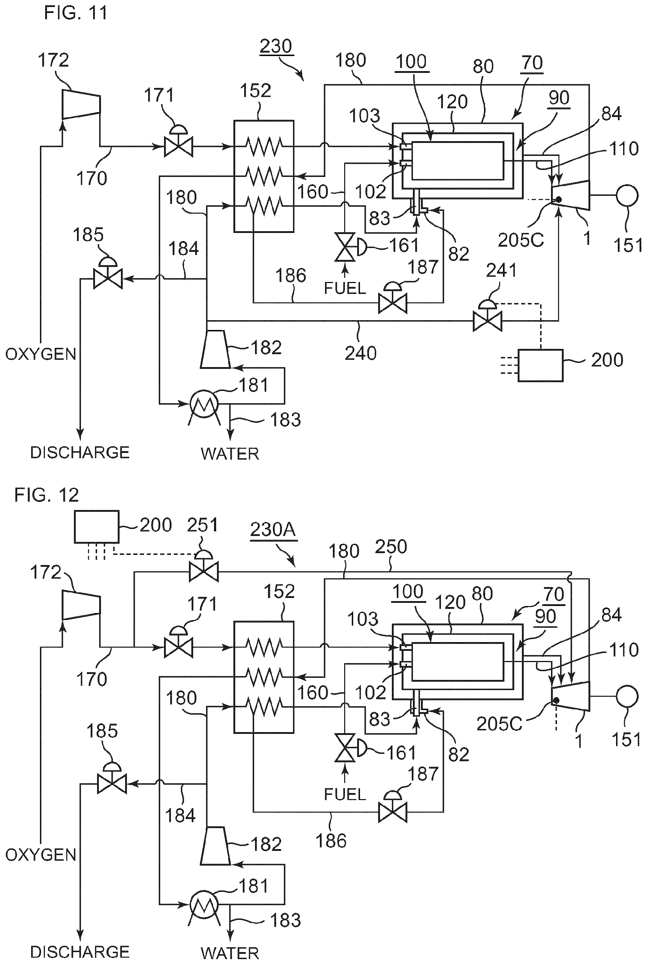

Fig. 10 is a view illustrating a meridian cross section of a turbine 1 and a combustion apparatus 70 included in a CO₂ gas turbine facility 230 of a third embodiment. Fig. 11 is a system diagram of the CO₂ gas turbine facility 230 of the third embodiment.

The CO₂ gas turbine facility 230 of the third embodiment has the same configuration as that of the CO₂ gas turbine facility 150 of the first embodiment except a configuration of a temperature reducing mechanism for a working fluid. Therefore, the configuration of the temperature reducing mechanism for the working fluid is mainly described here.

As illustrated in Fig. 10, in an inner casing 20, an introduction passage 21A which guides a cooling medium to an outer shroud 40 at a stator blade 42 at an initial-stage turbine stage is formed. The introduction passage 21A penetrates in the inner casing 20.

One end of a stator-blade introduction pipe 24 which guides the cooling medium to the introduction passage 21A is coupled to an opening of the introduction passage 21A on a radial outside of the inner casing 20. The other end of the stator-blade introduction pipe 24 penetrates an outer casing 10 to project to the outside of the outer casing 10, for example.

Further, as illustrated in Fig. 11, the temperature reducing mechanism for the working fluid in the CO₂ gas turbine facility 230 includes a control unit 200, a sensing unit 205C, a pipe 240, and a flow rate regulating valve 241. The control unit 200 is communicably connected to the sensing unit 205C and the flow rate regulating valve 241.

Incidentally, here, as a sensing part, there is indicated one example of using the sensing unit 205C, but, as the sensing part, the other sensing units indicated in the first embodiment may be used.

As illustrated in Fig. 11, one end of the pipe 240 is coupled to a pipe 180 between a compressor 182 and a heat exchanger 152. The other end of the pipe 240 is coupled to the other end of the stator-blade introduction pipe 24 illustrated in Fig. 10.

The pipe 240 includes a flow rate regulating valve 241 which regulates a flow rate of carbon dioxide to be introduced into the stator-blade introduction pipe 24.

A temperature of the carbon dioxide flowing through the pipe 240 is the same as a temperature of carbon dioxide flowing through a pipe 186 at the time of rated operation or lower than the temperature thereof. That is, the temperature of the cooling medium introduced into the initial-stage stator blade 42 is the same as the temperature of the cooling medium introduced via the pipe 186 into a space 22 in the inner casing 20 at the time of rated operation or lower than the temperature thereof.

The pipe 240 functions as a fluid introduction pipe which introduces the fluid at the same temperature as a rated temperature of the carbon dioxide flowing through the pipe 186 at the time of rated operation or at a lower temperature than the rated temperature into the interior of the stator blade 42 at the initial-stage turbine stage.

Incidentally, in the configuration illustrated in Fig. 11, the carbon dioxide without being heated in the heat exchanger 152 flows through the pipe 240. Therefore, in the configuration illustrated in Fig. 11, the temperature of the cooling medium introduced via the pipe 240 into the initial-stage stator blade 42 is lower than the temperature of the cooling medium introduced via the pipe 186 into the space 22.

The control unit 200 controls the flow rate regulating valve 241 based on a sensed signal from the sensing unit 205C to control the flow rate of the carbon dioxide to be introduced via the pipe 240 into the initial-stage stator blade 42.

Here, the flow rate of the carbon dioxide introduced into the initial-stage stator blade 42 can be regulated without being affected by the cooling medium introduced into the space 22.

Further, it is preferable to introduce the carbon dioxide (cooling medium) into the initial-stage stator blade 42 also at the time of normal operation. Thus, for example, the cooling medium is introduced via the pipe 240 into the initial-stage stator blade 42 also at the time of normal operation. A flow rate of the cooling medium introduced into the initial-stage stator blade 42 at the time of normal operation is regulated to the same extent as the flow rate of the cooling medium introduced from the space 22 into the initial-stage stator blade 42 at the time of normal operation in the first embodiment, for example.

Then, when a sensed signal determination unit 202a determines not to exceed a temperature threshold value in determination in Step S2 of the operation in the temperature reducing mechanism for the working fluid illustrated in Fig. 5 (No in Step S2), the sensed signal determination unit 202a executes the processing in Step S2 again.

At this time, the cooling medium at a flow rate required to be introduced at the time of normal operation is introduced via the pipe 240 into the initial-stage stator blade 42.

On the other hand, when the sensed signal determination unit 202a determines to exceed the temperature threshold value in the determination in Step S2 (Yes in Step S2), the sensed signal determination unit 202a outputs a control signal for further opening the flow rate regulating valve 241 to an output unit 204 (Step S3).

The output unit 204 outputs the control signal from the sensed signal determination unit 202a to the flow rate regulating valve 241 to further open the flow rate regulating valve 241 (Step S4).

At this time, the flow rate of the carbon dioxide introduced via the pipe 240 into the initial-stage stator blade 42 is larger than the flow rate of the cooling medium introduced into the initial-stage stator blade 42 at the time of normal operation.

Here, the control illustrated in Fig. 5 is constantly performed. Then, after further opening the flow rate regulating valve 241 in Step 4, when the sensed signal determination unit 202a determines not to exceed the temperature threshold value in the determination in Step S2 (No in Step S2), the sensed signal determination unit 202a outputs a control signal for the flow rate regulating valve 241 to be regulated to the flow rate of the cooling medium required to be introduced into the initial-stage stator blade 42 at the time of normal operation to the output unit 204.

Then, the output unit 204 outputs the control signal from the sensed signal determination unit 202a to the flow rate regulating valve 241 to regulate the flow rate regulating valve 241.

Incidentally, here, there is indicated one example of introducing the cooling medium via the stator-blade introduction pipe 24 and the introduction passage 21A into the initial-stage stator blade 42, and the cooling medium may also be introduced into the stator blade 42 at another turbine stage other than the initial-stage stator blade 42.

In the CO₂ gas turbine facility 230 of the third embodiment, when the temperature of the working fluid at a temperature sensing section where the sensing unit 205C is installed exceeds the temperature threshold value, it is possible to introduce more low-temperature carbon dioxide (cooling medium) via the pipe 240 into the initial-stage stator blade 42.

Further, the flow rate of the carbon dioxide introduced into the initial-stage stator blade 42 is controlled independently regardless of the flow rate of the cooling medium introduced into the space 22. Therefore, the flow rate of the carbon dioxide introduced into the initial-stage stator blade 42 can be easily increased.

For example, when the temperature of the working fluid exceeds the temperature threshold value, it is possible to introduce more cooling medium than that at the time of normal operation into the initial-stage stator blade 42.

In the CO₂ gas turbine facility 230 of the third embodiment, in addition to the cooling medium introduced into the space 22, the cooling medium introduced into the initial-stage stator blade 42 flows out to a working fluid flow path 46. This causes a reduction in a temperature of the working fluid flowing through the working fluid flow path 46 when the temperature of the working fluid exceeds the temperature threshold value. Therefore, it is possible to prevent the working fluid at a temperature exceeding a heat-resistant limit of constituent members of the turbine from flowing through a main flow path in the turbine.

Further, when the temperature of the cooling medium introduced via the pipe 240 into the initial-stage stator blade 42 is lower than the temperature of the cooling medium introduced into the space 22, it is possible to make the temperature of the working fluid flowing through the working fluid flow path 46 lower.

### (Other modes of CO2 gas turbine facilities in Third embodiment)

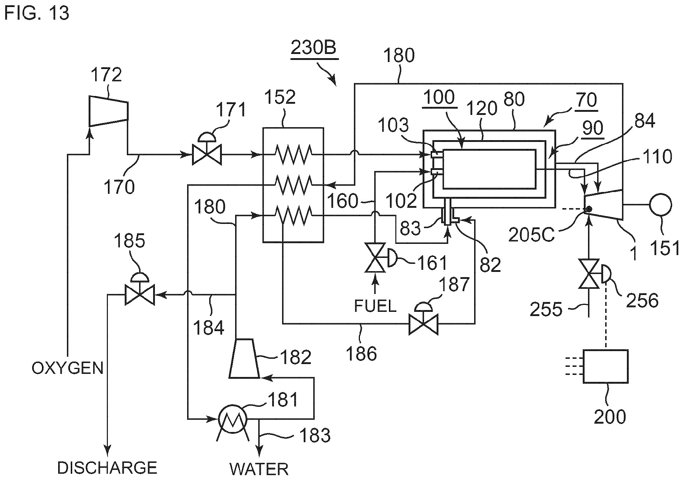

Fig. 12 and Fig. 13 are system diagrams of CO₂ gas turbine facilities 230A, 230B for explaining the other modes in the third embodiment.

As illustrated in Fig. 12, in place of the pipe 240, a pipe 250 which introduces an oxidant into the initial-stage stator blade 42 may be included. One end of the pipe 250 is coupled to a pipe 170 between a compressor 172 and a flow rate regulating valve 171. The other end of the pipe 250 is coupled to the other end of the stator-blade introduction pipe 24 illustrated in Fig. 10.

The pipe 250 includes a flow rate regulating valve 251 which regulates a flow rate of the oxidant to be introduced into the stator-blade introduction pipe 24.

A temperature of the oxidant flowing through the pipe 250 is the same as the temperature of the carbon dioxide flowing through the pipe 186 at the time of rated operation or lower than the temperature thereof. That is, the temperature of the cooling medium (oxidant) introduced into the initial-stage stator blade 42 is the same as the temperature of the cooling medium introduced via the pipe 186 into a space 22 in the inner casing 20 at the time of rated operation or lower than the temperature thereof.

Further, the pipe 250 functions as a fluid introduction pipe which introduces the fluid at the same temperature as the rated temperature of the carbon dioxide flowing through the pipe 186 at the time of rated operation or at a lower temperature than the rated temperature into the interior of the stator blade 42 at the initial-stage turbine stage.

The control unit 200 controls the flow rate regulating valve 251 based on a sensed signal from the sensing unit 205C to control the flow rate of the oxidant to be introduced via the pipe 250 into the initial-stage stator blade 42.

Incidentally, the operation in a temperature reducing mechanism for the working fluid is similar to the operation in the temperature reducing mechanism for the working fluid described in the above-described third embodiment.

According to the CO₂ gas turbine facility 230A, when the temperature of the working fluid at the temperature sensing section where the sensing unit 205C is installed exceeds the temperature threshold value, it is possible to introduce more cooling medium via the pipe 250 into the initial-stage stator blade 42.

Incidentally, the operation and effect in the CO₂ gas turbine facility 230A is similar to the operation and effect described in the above-described third embodiment.

As illustrated in Fig. 13, in place of the pipe 240, a pipe 255 which introduces a fluid functioning as the cooling medium from another supply source into the initial-stage stator blade 42 may be included. One end of the pipe 255 is coupled to the other supply source. The other end of the pipe 255 is coupled to the other end of the stator-blade introduction pipe 24 illustrated in Fig. 10.

The pipe 255 includes a flow rate regulating valve 256 which regulates a flow rate of the cooling medium to be introduced into the stator-blade introduction pipe 24.

A temperature of the cooling medium flowing through the pipe 255 is the same as the temperature of the carbon dioxide flowing through the pipe 186 at the time of rated operation or lower than the temperature thereof. That is, the temperature of the cooling medium introduced into the initial-stage stator blade 42 is the same as the temperature of the cooling medium introduced via the pipe 186 into the space 22 in the inner casing 20 at the time of rated operation or lower than the temperature thereof.

Further, the pipe 255 functions as a fluid introduction pipe which introduces the fluid at the same temperature as the rated temperature of the carbon dioxide flowing through the pipe 186 at the time of rated operation or at a lower temperature than the rated temperature into the interior of the stator blade 42 at the initial-stage turbine stage.

Incidentally, the other supply source and the cooling medium supplied from the other supply source are the same as the other supply source and the cooling medium supplied from the other supply source in the embodiment illustrated in Fig. 7.

The control unit 200 controls the flow rate regulating valve 256 based on a sensed signal from the sensing unit 205C to control the flow rate of the cooling medium (carbon dioxide) to be introduced via the pipe 255 into the initial-stage stator blade 42.

Incidentally, the operation in a temperature reducing mechanism for the working fluid is similar to the operation in the temperature reducing mechanism for the working fluid described in the above-described third embodiment.

According to the CO₂ gas turbine facility 230B, when a temperature of the working fluid at the temperature sensing section where the sensing unit 205C is installed exceeds the temperature threshold value, it is possible to introduce more cooling medium via the pipe 255 into the initial-stage stator blade 42.

Incidentally, the operation and effect in the CO₂ gas turbine facility 230B is similar to the operation and effect described in the above-described third embodiment.

Further, as the further other embodiment, a cooling system for the stator blade 42 including the introduction passage 21A and the stator-blade introduction pipe 24 may include the introduction passage 21 indicated in the first embodiment, though not illustrated. In this case, on the outer shroud 40 side of the stator blade 42, the introduction passage 21A and the introduction passage 21 are integrated to form one passage.

In this case, a pressure of the cooling medium introduced via the stator-blade introduction pipe 24 into the introduction passage 21A is set to be equal to or more than a pressure of the cooling medium introduced from the space 22 into the introduction passage 21. This causes the cooling medium to be introduced via the introduction passage 21A into the stator blade 42.

Further, when the pressure of the cooling medium introduced into the introduction passage 21A is higher than the pressure of the cooling medium introduced into the introduction passage 21, the cooling medium is introduced via the introduction passage 21A into the stator blade 42, and at the same time, the cooling medium flows out from the introduction passage 21 into the space 22. This causes the cooling medium at a proper flow rate to be introduced into the stator blade 42, and causes a flow rate of the cooling medium introduced into a cooling structure portion 33 of a turbine rotor 30, or the like to be increased.

In a case of including this configuration, the operation of introducing the cooling medium via the pipe 240 into the initial-stage stator blade 42 at the time of normal operation, which has been described in the third embodiment, becomes unnecessary.

At the time of normal operation, the flow rate regulating valve 241 illustrated in Fig. 11 is closed. Then, similarly to the first embodiment, the cooling medium is introduced from the space 22 via the introduction passage 21 into the stator blade 42.

Then, similarly to the operation in the temperature reducing mechanism for the working fluid illustrated in Fig. 5, when the sensed signal determination unit 202a determines to exceed the temperature threshold value in determination in Step S2 (Yes in Step S2), the sensed signal determination unit 202a outputs a control signal for opening the flow rate regulating valve 241 to the output unit 204 (Step S3).

The output unit 204 outputs the control signal from the sensed signal determination unit 202a to the flow rate regulating valve 241 to open the flow rate regulating valve 241 (Step S4).

By including this configuration, at the time of normal operation, the cooling medium is introduced from the space 22 via the introduction passage 21 into the stator blade 42. Further, when a temperature of the working fluid exceeds the threshold value, the cooling medium is introduced via the introduction passage 21A into the stator blade 42.

Incidentally, also in the other modes illustrated in Fig. 12 and Fig. 13, as described above, the cooling system for the stator blade 42 including the introduction passage 21A and the stator-blade introduction pipe 24 may include the introduction passage 21 in the first embodiment.

Including the introduction passage 21A and the introduction passage 21 allows more cooling medium than that at the time of normal operation to be introduced into the initial-stage stator blade 42 when the temperature of the working fluid exceeds the temperature threshold value.

Therefore, when the temperature of the working fluid exceeds the temperature threshold value, a flow rate of the cooling medium flowing out from the initial-stage stator blade 42 to the working fluid flow path 46 is increased. This causes a reduction in a temperature of the working fluid flowing through the working fluid flow path 46 when the temperature of the working fluid exceeds the temperature threshold value. Therefore, it is possible to prevent the working fluid at a temperature exceeding the heat-resistant limit of the constituent members of the turbine from flowing through a main flow path in the turbine.

### (Fourth embodiment)

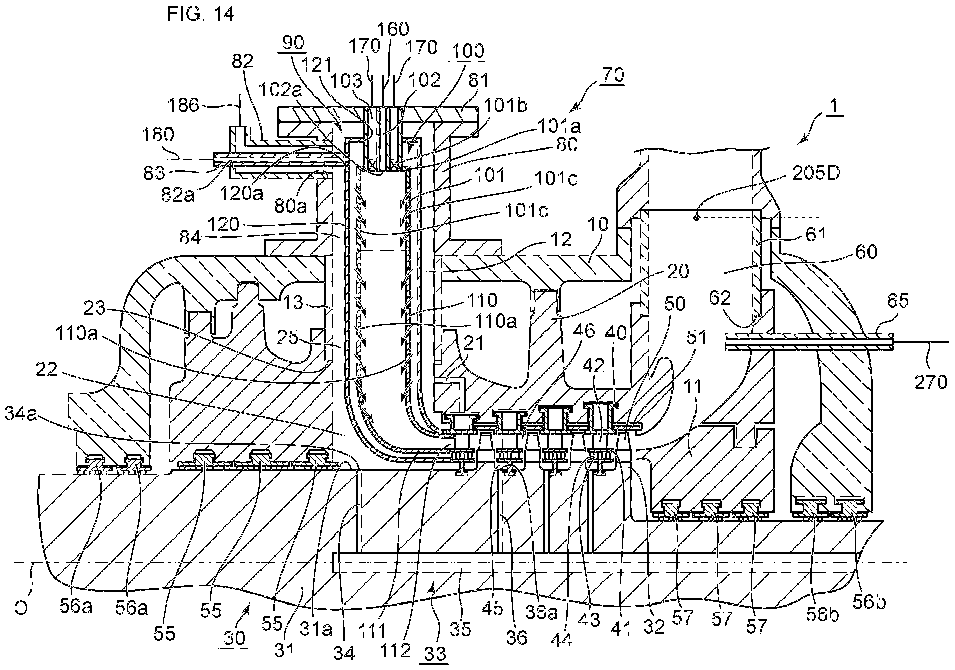

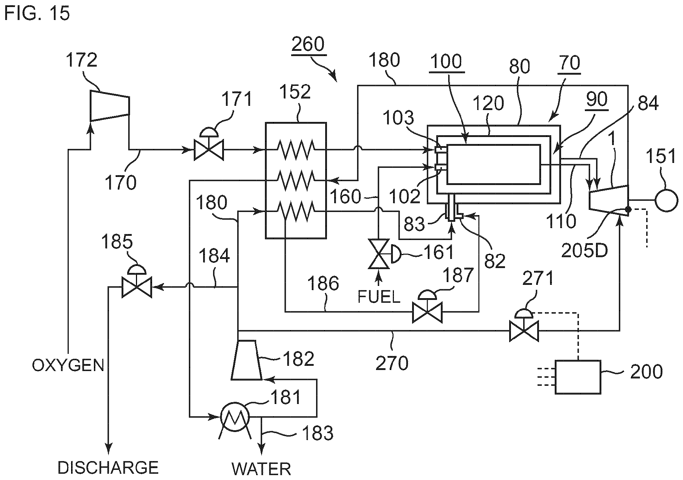

Fig. 14 is a view illustrating a meridian cross section of a turbine 1 and a combustion apparatus 70 included in a CO₂ gas turbine facility 260 of a fourth embodiment. Fig. 15 is a system diagram of the CO₂ gas turbine facility 260 of the fourth embodiment.

The CO₂ gas turbine facility 260 of the fourth embodiment has the same configuration as that of the CO₂ gas turbine facility 150 of the first embodiment except a configuration of a temperature reducing mechanism for a working fluid. Therefore, the configuration of the temperature reducing mechanism for the working fluid is mainly described here.

As illustrated in Fig. 14, on a low-pressure side of the turbine 1, for example, an exhaust-hood introduction pipe 65 penetrating an outer casing 10 and an inner casing 20 and having one end located in an exhaust hood 60 is included.

One end of the exhaust-hood introduction pipe 65 is disposed at an outlet of an annular diffuser being an annular passage formed on the downstream side at a final-stage turbine stage, for example. Note that a disposed position of one end of the exhaust-hood introduction pipe 65 is not limited to the above-described position. The disposed position of one end of the exhaust-hood introduction pipe 65 only needs to be a position allowing a reduction in a temperature of the working fluid in the exhaust hood 60.

Further, as illustrated in Fig. 15, the temperature reducing mechanism for the working fluid in the CO₂ gas turbine facility 260 includes a control unit 200, a sensing unit 205D, a pipe 270, and a flow rate regulating valve 271. The control unit 200 is communicably connected to the sensing unit 205D and the flow rate regulating valve 271.

The sensing units 205D is constituted by, for example, a temperature sensing unit which senses a temperature. As the temperature sensing unit, for example, a thermocouple or the like is cited.

The sensing unit 205D is installed at an outlet of the turbine 1 as illustrated in Fig. 14 and Fig. 15. The sensing unit 205D senses a temperature of the working fluid at the outlet of the turbine 1.

As illustrated in Fig. 15, one end of the pipe 270 is coupled to a pipe 180 between a compressor 182 and a heat exchanger 152. The other end of the pipe 270 is coupled to the other end of the exhaust-hood introduction pipe 65 illustrated in Fig. 14.

The pipe 270 includes a flow rate regulating valve 271 which regulates a flow rate of carbon dioxide to be introduced into the exhaust-hood introduction pipe 65 (exhaust hood 60).

A temperature of carbon dioxide flowing through the pipe 270 is lower than a temperature of the working fluid flowing through the exhaust hood 60. That is, a temperature of the cooling medium (carbon dioxide) introduced into the exhaust hood 60 is lower than the temperature of the working fluid flowing through the exhaust hood 60.

Here, the pipe 180 functions as a carbon dioxide circulation pipe which circulates a part of the working fluid through the combustion apparatus 70. Further, the pipe 270 functions as a fluid introduction pipe which introduces the carbon dioxide at a lower temperature than the temperature of the working fluid flowing through the exhaust hood 60 into the exhaust hood 60.

The control unit 200 controls the flow rate regulating valve 271 based on a sensed signal from the sensing unit 205D to control the flow rate of the low-temperature cooling medium (carbon dioxide) to be introduced via the pipe 270 into the exhaust hood 60.

Incidentally, the operation in the temperature reducing mechanism for the working fluid is similar to the operation in the temperature reducing mechanism for the working fluid illustrated in Fig. 5.

In the CO₂ gas turbine facility 260 of the fourth embodiment, when a temperature of the working fluid at a temperature sensing section where the sensing unit 205D is installed exceeds the temperature threshold value, it is possible to introduce the low-temperature carbon dioxide from the pipe 270 into the exhaust hood 60.

This allows a reduction in the temperature of the working fluid flowing through the exhaust hood 60 as compared with the time when the flow rate regulating valve 271 is closed (the time of normal operation), when the temperature reducing mechanism for the working fluid is operated.

This allows a reduction in the temperature of the working fluid owing to the cooling medium, for example, even when the temperature of the working fluid flowing through the exhaust hood 60 rises due to a windage loss in the working fluid flow path 46. Further, at this time, even when the working fluid flows back from the exhaust hood 60 to a downstream-stage turbine stage, it is possible to suppress a temperature rise of the working fluid in the exhaust hood 60.

Moreover, it is possible to prevent the working fluid at a temperature exceeding the heat-resistant limit of the constituent members of the turbine from flowing through a main flow path in the turbine.

### (Other modes of CO2 gas turbine facilities in Fourth embodiment)

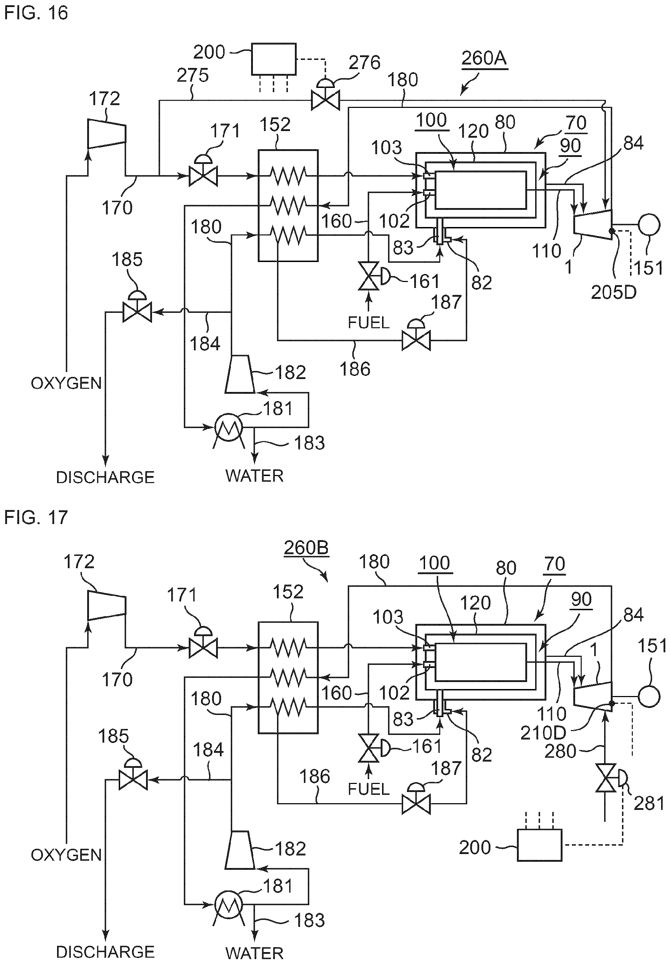

Fig. 16 and Fig. 17 are system diagrams of CO₂ gas turbine facilities 260A, 260B for explaining other modes in the fourth embodiment.

As illustrated in Fig. 16, in place of the pipe 270, a pipe 275 which introduces an oxidant into the exhaust hood 60 may be included. One end of the pipe 275 is coupled to a pipe 170 between a compressor 172 and a flow rate regulating valve 171. The other end of the pipe 275 is coupled to the other end of the exhaust-hood introduction pipe 65 illustrated in Fig. 14.

The pipe 275 includes a flow rate regulating valve 276 which regulates a flow rate of the oxidant to be introduced into the exhaust-hood introduction pipe 65 (exhaust hood 60).

A temperature of the oxidant flowing through the pipe 275 is lower than the temperature of the working fluid flowing through the exhaust hood 60. That is, the temperature of the cooling medium (oxidant) introduced into the exhaust hood 60 is lower than the temperature of the working fluid flowing through the exhaust hood 60.

Incidentally, the pipe 275 functions as a fluid introduction pipe which introduces the oxidant at a lower temperature than the temperature of the working fluid flowing through the exhaust hood 60 into the exhaust hood 60.

The control unit 200 controls the flow rate regulating valve 276 based on a sensed signal from the sensing unit 205D to control the flow rate of the low-temperature oxidant to be introduced via the pipe 275 into the exhaust hood 60.

Incidentally, the operation in a temperature reducing mechanism for the working fluid is similar to the operation in the temperature reducing mechanism for the working fluid illustrated in Fig. 5.

According to the CO₂ gas turbine facility 260A, when the temperature of the working fluid at the temperature sensing section where the sensing unit 205D is installed exceeds the temperature threshold value, it is possible to introduce the low-temperature cooling medium via the pipe 275 into the exhaust hood 60.

Incidentally, the operation and effect in the CO₂ gas turbine facility 260A is similar to the operation and effect described in the above-described fourth embodiment.

As illustrated in Fig. 17, in place of the pipe 270, a pipe 280 which introduces a fluid functioning as the cooling medium from another supply source into the exhaust hood 60 may be included. One end of the pipe 280 is coupled to the other supply source. The other end of the pipe 280 is coupled to the other end of the exhaust-hood introduction pipe 65 illustrated in Fig. 14.

The pipe 280 includes a flow rate regulating valve 281 which regulates a flow rate of the cooling medium to be introduced into the exhaust-hood introduction pipe 65 (exhaust hood 60).

A temperature of the cooling medium flowing through the pipe 280 is lower than the temperature of the working fluid flowing through the exhaust hood 60. That is, the temperature of the cooling medium introduced into the exhaust hood 60 is lower than the temperature of the working fluid flowing through the exhaust hood 60.

Incidentally, the pipe 280 functions as a fluid introduction pipe which introduces the cooling medium at a lower temperature than the temperature of the working fluid flowing through the exhaust hood 60 into the exhaust hood 60.

Incidentally, the other supply source and the cooling medium supplied from the other supply source are the same as the other supply source and the cooling medium supplied from the other supply source in the embodiment illustrated in Fig. 7.

The control unit 200 controls the flow rate regulating valve 281 based on a sensed signal from the sensing unit 205D to control the flow rate of the low-temperature cooling medium to be introduced via the pipe 280 into the exhaust hood 60.

Incidentally, the operation in a temperature reducing mechanism for the working fluid is similar to the operation in the temperature reducing mechanism for the working fluid illustrated in Fig. 5.

According to the CO₂ gas turbine facility 260B, when a temperature of the working fluid at the temperature sensing section where the sensing unit 205D is installed exceeds the temperature threshold value, it is possible to introduce the low-temperature cooling medium via the pipe 280 into the exhaust hood 60.

Incidentally, the operation and effect in the CO₂ gas turbine facility 260B is similar to the operation and effect described in the above-described fourth embodiment.

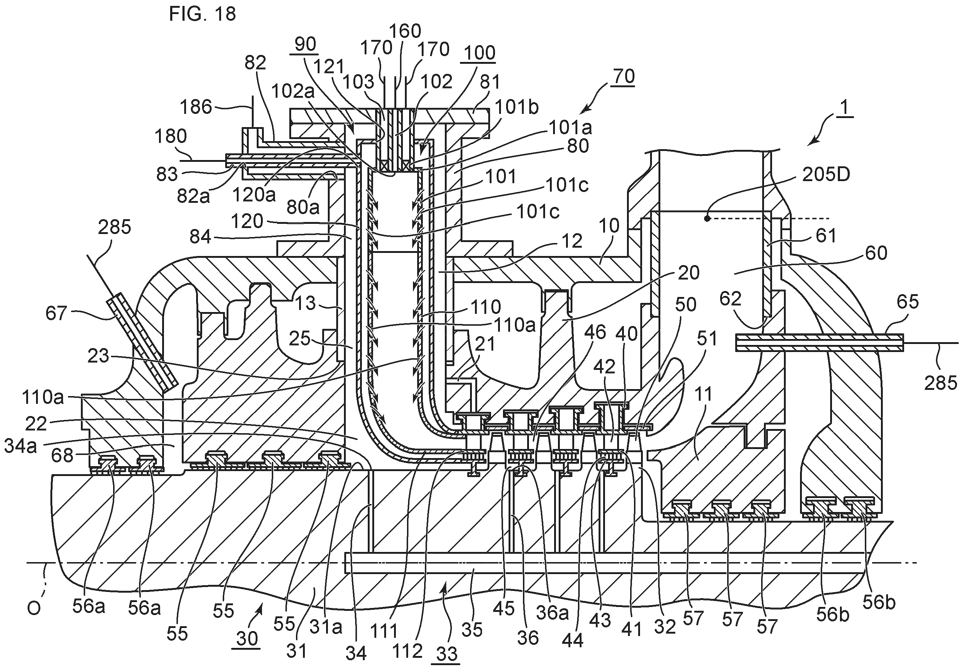

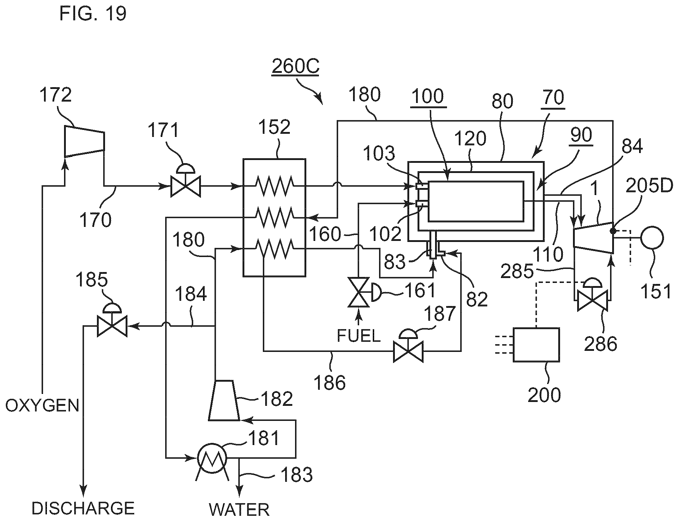

Fig. 18 is a view illustrating a meridian cross section of a turbine 1 and a combustion apparatus 70 included in a CO₂ gas turbine facility 260C of the other mode in the fourth embodiment. Fig. 19 is a system diagram of the CO₂ gas turbine facility 260C for explaining the other mode in the fourth embodiment.

As illustrated in Fig. 18, on a high-pressure side of the turbine 1, for example, a gland-part introduction pipe 67 penetrating an outer casing 10 is included. One end of the gland-part introduction pipe 67 is located in a space 68 between an inner casing 20 including gland seal parts 55 and the outer casing 10 including gland seal parts 56a.

Further, as illustrated in Fig. 19, a temperature reducing mechanism for the working fluid in the CO₂ gas turbine facility 260C includes the control unit 200, the sensing unit 205D, a pipe 285, and a flow rate regulating valve 286. The control unit 200 is communicably connected to the sensing unit 205D and the flow rate regulating valve 286.

As illustrated in Fig. 18, and Fig. 19, one end of the pipe 285 is coupled to the other end of the gland-part introduction pipe 67. The other end of the pipe 285 is coupled to the other end of an exhaust-hood introduction pipe 65.

The pipe 285 includes the flow rate regulating valve 286 which regulates a flow rate of the cooling medium (carbon dioxide) to be introduced into the exhaust-hood introduction pipe 65 (exhaust hood 60).

Here, the cooling medium (carbon dioxide) introduced into a space 22 in the inner casing 20 flows through the gland seal parts 55 into the space 68. A pressure of the cooling medium in the space 68 is higher than a pressure of the working fluid in the exhaust hood 60. Therefore, the cooling medium in the space 68 flows through the pipe 285 into the exhaust hood 60.

Incidentally, one end of the gland-part introduction pipe 67 is not limited to being located in the space 68. One end of the gland-part introduction pipe 67 may be located at the gland seal part 55 through which the cooling medium at a higher pressure than the pressure of the working fluid in the exhaust hood 60 flows, for example.

Here, a pressure of the cooling medium introduced into the exhaust hood 60 is regulated by an axial position of the gland seal part 55 to perform extraction, for example.

A temperature of the cooling medium flowing through the pipe 285 is lower than a temperature of the working fluid flowing through the exhaust hood 60. That is, a temperature of the cooling medium (carbon dioxide) introduced into the exhaust hood 60 is lower than the temperature of the working fluid flowing through the exhaust hood 60.

Incidentally, the pipe 285 functions as a fluid introduction pipe which introduces the cooling medium at a lower temperature than the temperature of the working fluid flowing through the exhaust hood 60 into the exhaust hood 60.

The control unit 200 controls the flow rate regulating valve 286 based on a sensed signal from the sensing unit 205D to control the flow rate of the low-temperature cooling medium to be introduced via the pipe 285 into the exhaust hood 60.

Incidentally, the operation in the temperature reducing mechanism for the working fluid is similar to the operation in the temperature reducing mechanism for the working fluid illustrated in Fig. 5.

According to the CO₂ gas turbine facility 260C, when a temperature of the working fluid at the temperature sensing section where the sensing unit 205D is installed exceeds the temperature threshold value, it is possible to introduce the low-temperature cooling medium via the pipe 285 into the exhaust hood 60.

Incidentally, the operation and effect in the CO₂ gas turbine facility 260C is similar to the operation and effect described in the above-described fourth embodiment. Further, the CO₂ gas turbine facility 260C does not affect a turbine output and turbine efficiency since the cooling medium having passed through the gland seal parts 55 is introduced into the exhaust hood 60.

According to the above-described embodiment, regulating the temperature and the flow rate of the cooling medium introduced into the combustion apparatus or the turbine enables a reduction in the temperature of the working fluid flowing in the turbine.

Here, in this embodiment, two or more of the above-described embodiments may be combined to constitute a CO₂ gas turbine facility.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A gas turbine facility, comprising:
a combustion apparatus which combusts fuel and an oxidant to produce a combustion gas to be introduced into a turbine;
a carbon dioxide circulation pipe which circulates carbon dioxide in a working fluid discharged from the turbine through the combustion apparatus as a cooling medium; and
a fluid introduction pipe which introduces a fluid at a lower temperature than a temperature of carbon dioxide flowing through the carbon dioxide circulation pipe into the carbon dioxide circulation pipe.

2. The gas turbine facility according to claim 1, further comprising:
a heat exchanger which is interposed on the carbon dioxide circulation pipe and heats the carbon dioxide to circulate through the combustion apparatus,
wherein the fluid introduction pipe comprises a flow rate regulating valve, both ends of the fluid introduction pipe are each coupled to the carbon dioxide circulation pipe so as to sandwich the heat exchanger, and the fluid introduction pipe bypasses the heat exchanger.

3. The gas turbine facility according to claim 1, further comprising:
an oxidant supply pipe which supplies an oxidant to the combustion apparatus; and
a heat exchanger which is interposed on the carbon dioxide circulation pipe and heats the carbon dioxide to circulate through the combustion apparatus,
wherein the fluid introduction pipe comprises a flow rate regulating valve, one end of the fluid introduction pipe is coupled to the oxidant supply pipe, and the other end of the fluid introduction pipe is coupled to the carbon dioxide circulation pipe through which the carbon dioxide heated in the heat exchanger flows.

4. The gas turbine facility according to claim 1, further comprising:
a heat exchanger which is interposed on the carbon dioxide circulation pipe and heats the carbon dioxide to circulate through the combustion apparatus,
wherein the fluid introduction pipe comprises a flow rate regulating valve, one end of the fluid introduction pipe is coupled to a fluid supply part which supplies the fluid, and the other end of the fluid introduction pipe is coupled to the carbon dioxide circulation pipe through which the carbon dioxide heated in the heat exchanger flows.

5. A gas turbine facility, comprising:
a combustion apparatus which combusts fuel and an oxidant to produce a combustion gas to be introduced into a turbine;
a carbon dioxide circulation pipe which circulates carbon dioxide in a working fluid discharged from the turbine through the turbine as a cooling medium; and
a fluid introduction pipe which introduces a fluid at a same temperature as a rated temperature of carbon dioxide flowing through the carbon dioxide circulation pipe at a time of rated operation or at a lower temperature than the rated temperature into the carbon dioxide circulation pipe.

6. The gas turbine facility according to claim 5, further comprising:
an oxidant supply pipe which supplies an oxidant to the combustion apparatus,
wherein the fluid introduction pipe comprises a flow rate regulating valve, one end of the fluid introduction pipe is coupled to the oxidant supply pipe, and the other end of the fluid introduction pipe is coupled to the carbon dioxide circulation pipe.

7. The gas turbine facility according to claim 5,
Wherein the fluid introduction pipe comprises a flow rate regulating valve, one end of the fluid introduction pipe is coupled to a fluid supply part which supplies the fluid, and the other end of the fluid introduction pipe is coupled to the carbon dioxide circulation pipe.

8. A gas turbine facility, comprising:
a combustion apparatus which combusts fuel and an oxidant to produce a combustion gas;
a turbine into which the combustion gas produced by the combustion apparatus is introduced and which includes a turbine stage composed of a stator blade and a rotor blade in a plurality of stages;
a carbon dioxide circulation pipe which circulates carbon dioxide in a working fluid discharged from the turbine through the turbine as a cooling medium; and
a fluid introduction pipe which introduces a fluid at a same temperature as a rated temperature of carbon dioxide flowing through the carbon dioxide circulation pipe at a time of rated operation or at a lower temperature than the rated temperature into an interior of the stator blade at the turbine stage at an initial stage.

9. The gas turbine facility according to claim 8,
wherein the fluid introduction pipe comprises a flow rate regulating valve, one end of the fluid introduction pipe is coupled to the carbon dioxide circulation pipe, and the other end of the fluid introduction pipe is coupled to a stator-blade introduction pipe for introducing the fluid into the interior of the stator blade.

10. The gas turbine facility according to claim 8, further comprising:
an oxidant supply pipe which supplies an oxidant to the combustion apparatus,
wherein the fluid introduction pipe comprises a flow rate regulating valve, one end of the fluid introduction pipe is coupled to the oxidant supply pipe, and the other end of the fluid introduction pipe is coupled to a stator-blade introduction pipe for introducing the fluid into the interior of the stator blade.

11. The gas turbine facility according to claim 8,
wherein the fluid introduction pipe comprises a flow rate regulating valve, one end of the fluid introduction pipe is coupled to a fluid supply part which supplies the fluid, and the other end of the fluid introduction pipe is coupled to a stator-blade introduction pipe for introducing the fluid into the interior of the stator blade.

12. A gas turbine facility which circulates carbon dioxide in a working fluid discharged from a turbine through the turbine as a cooling medium, the gas turbine facility comprising:
a combustion apparatus which combusts fuel and an oxidant to produce a combustion gas to be introduced into the turbine;
an exhaust hood through which the working fluid discharged from the turbine flows; and
a fluid introduction pipe which introduces a fluid at a lower temperature than a temperature of the working fluid flowing through the exhaust hood into the exhaust hood.

13. The gas turbine facility according to claim 12, further comprising:
a carbon dioxide circulation pipe which circulates carbon dioxide in a working fluid discharged from the turbine through the combustion apparatus as a cooling medium,
wherein the fluid introduction pipe comprises a flow rate regulating valve, one end of the fluid introduction pipe is coupled to the carbon dioxide circulation pipe, and the other end of the fluid introduction pipe is coupled to an exhaust-hood introduction pipe for introducing the fluid into the exhaust hood.

14. The gas turbine facility according to claim 12, further comprising:
an oxidant supply pipe which supplies an oxidant to the combustion apparatus,
wherein the fluid introduction pipe comprises a flow rate regulating valve, one end of the fluid introduction pipe is coupled to the oxidant supply pipe, and the other end of the fluid introduction pipe is coupled to an exhaust-hood introduction pipe for introducing the fluid into the exhaust hood.

15. The gas turbine facility according to claim 12,
wherein the fluid introduction pipe comprises a flow rate regulating valve, one end of the fluid introduction pipe is coupled to a fluid supply part which supplies the fluid, and the other end of the fluid introduction pipe is coupled to an exhaust-hood introduction pipe for introducing the fluid into the exhaust hood.

16. The gas turbine facility according to claim 12,
wherein the turbine comprises, between a casing and a turbine rotor, a gland seal part which suppresses leakage of carbon dioxide as a cooling medium introduced into the turbine to an outside, the fluid introduction pipe comprises a flow rate regulating valve, one end of the fluid introduction pipe is open to the gland seal part through which carbon dioxide flows, and the other end of the fluid introduction pipe is coupled to an exhaust-hood introduction pipe for introducing the fluid into the exhaust hood.

17. The gas turbine facility according to any one of claims 2 to 4, further comprising:
a temperature sensing device which senses a temperature of a working fluid flowing through a main flow path of the combustion apparatus or the turbine; and
a control unit which controls the flow rate regulating valve based on a sensed signal from the temperature sensing device.

18. The gas turbine facility according to any one of claims 6 to 7, 9 to 11, 13 to 16, further comprising:
a temperature sensing device which senses a temperature of a working fluid flowing through a main flow path of the turbine; and
a control unit which controls the flow rate regulating valve based on a sensed signal from the temperature sensing device.
